# EUROPÄISCHE PATENTSCHRIFT

(11) **EP 4 412 008 B1**
(45) Veröffentlichungstag und Bekanntmachung des Hinweises auf die Patenterteilung: **21.05.2025**
(21) Anmeldenummer: 24151395.1
(22) Anmeldetag: 11.01.2024
(51) Int. Cl.: H01T 1/14, H01T 15/00, H02H 9/06, H02H 9/04, G06N 20/00, H01T 1/02, H01T 2/02

(54) **ÜBERSPANNUNGSABLEITER FÜR EIN GLEICHSTROMNETZ UND VERFAHREN ZUM BETREIBEN EINES SOLCHEN ÜBERSPANNUNGSABLEITERS**
SURGE ARRESTER FOR A DIRECT CURRENT NETWORK AND METHOD FOR OPERATING SUCH A SURGE ARRESTER
PARAFOUDRE POUR UN RÉSEAU À COURANT CONTINU ET PROCÉDÉ DE FONCTIONNEMENT D'UN TEL PARAFOUDRE

(30) Priorität: 02.02.2023 DE 102023102619
(43) Veröffentlichungstag der Anmeldung: 07.08.2024
(73) Patentinhaber: DEHN SE, 92318 Neumarkt i.d. OPf. (DE)
(72) Erfinder: Bühler, Klaus, 92318 Neumarkt i.d.OPf. (DE); Ehrhardt, Arnd, 92318 Neumarkt i.d.OPf. (DE); Kellermann, Marco, 92318 Neumarkt i.d.OPf. (DE)
(74) Vertreter: Prinz & Partner mbB

(56) Entgegenhaltungen:
- DE-A1- 10 211 796
- DE-A1- 102007 015 933
- DE-A1- 102011 053 415
- DE-A1- 102016 211 628

## Beschreibung

Die Erfindung betrifft einen Überspannungsableiter für ein Gleichstromnetz sowie ein Verfahren zum Betreiben eines solchen Überspannungsableiters.

Überspannungsableiter auf der Basis von Funkenstrecken werden zur Ableitung von transienten Störgrößen in Niederspannungsversorgungsnetzen eingesetzt.

Sogenannte "Netzableiter", also Überspannungsableiter, welche im Allgemeinen zwischen den Phasen und dem Neutral- bzw. Schutzleiter eines Stromnetzes angeordnet sind, sollen sowohl direkte oder eingekoppelte Impulsströme ableiten, beispielsweise verursacht durch Blitzereignisse, als auch Netzfolgeströme im Netz sicher unterbinden bzw. unterbrechen können, ohne dass es zur Unterbrechung der Netzversorgung für die Verbraucher im Gleichstromnetz kommt.

Für die bisher üblichen Wechselstromnetze haben sich hierzu verschiedene Technologien etabliert, mit denen sich auch vergleichsweise hohe prospektive Netzfolgeströme stark begrenzen lassen. Bei kleineren Strömen bis zu wenigen hundert Ampere und teilweise bei zuvor begrenzten Netzfolgeströmen erfolgt eine Löschung final durch einen Polaritätswechsel im natürlichen Stromnulldurchgang im Wechselstromnetz.

Bei der Umstellung der Versorgungsnetze auf Gleichspannung entfällt der natürliche Stromnulldurchgang jedoch. Hierdurch entfällt auch die natürliche Löschung von kleineren oder lediglich begrenzten Netzfolgeströmen. Zudem kann nicht von definierten Kurzschlussströmen ausgegangen werden, auf welche Schutzvorrichtungen zielgerichtet abgestimmt werden könnten. Die Höhe der Kurzschlussströme, die Einspeiserichtung und auch die Zeitkonstante des Gleichstromnetzes können stark variieren. Daher sind bereits bekannte Löschprinzipien aus Wechselstromnetzen für Gleichstromnetze nicht ohne Weiteres anwendbar.

Hohe prospektive Kurzschlussströme in einer Höhe von mehreren 10 kA können mit sogenannten Hörnerfunkenstrecken begrenzt werden. Derartige Hörnerfunkenstrecken umfassen insbesondere einen Zündbereich, in dem die Funkenstrecke zündet, eine Löschkammer zum Löschen des Lichtbogens sowie einen zwischen Zündbereich und Löschkammer angeordneten Laufbereich, den der gezündete Lichtbogen durchlaufen muss, um in der Löschkammer gelöscht werden zu können. Bei kleinen Gleichströmen mit Stromstärken von bis zu wenigen hundert Ampere durchläuft der Lichtbogen den Laufbereich jedoch eventuell nur langsam oder sogar gar nicht, sodass es zu Beschädigungen der Hörnerfunkenstrecke kommen kann.

Aus der DE 10 2007 015 933 A1 ist eine Überspannungsschutzeinrichtung für den Einsatz in Photovoltaikanlagen mit einem elektronischen Hybridkreis bekannt. Diese zeichnet sich durch ein zur Funkenstrecke parallel geschaltetes Halbleiterbauelement aus, das nach jedem Zünden der Funkenstrecke aktiviert wird und dazu dient, etwaige auftretende Netzfolgeströme zu löschen. Nachteilig an dieser Lösung ist, dass das Halbleiterbauelement den gesamten prospektiven Netzfolgestrom beherrschen können muss. Dies begrenzt die maximale Leistungsfähigkeit der Überspannungsschutzeinrichtung. Zudem sind die Kosten des jeweils einzusetzenden Halbleiterbauelementes unmittelbar an den zu beherrschenden Maximalstrom gekoppelt.

Die DE 10 2011 053 415 A1 offenbart ein Überspannungsschutzgerät mit einem ersten Ableitpfad und einem zweiten Ableitpfad, wobei der erste Ableitpfad eine Funkenstrecke und der zweite Ableitpfad einen triggerbaren Schalter und einen in Serie geschalteten Thermistor aufweist. Ferner weist das Überspannungsschutzgerät eine Steuereinrichtung auf, die basierend auf dem Zustand und/oder dem Verlauf des Zustands des ersten Ableiterpfades den triggerbaren Schalter im Fall eines Ableiterereignisses zur Durchschaltung veranlassen kann.

Die DE 102 11 796 A1 zeigt eine Überspannungsschutzeinrichtung mit einer von einer Netz- und Versorgungsspannung unabhängigen Selektionsbaugruppe, die zwischen einem zu schützenden Systemteil und Erde auftretende Überspannungsereignisse überwacht, um transiente und statische Ereignisse zu erkennen und in der je nach Art des Ereignisses ein dynamischer Kurzschlussschalter und/oder ein statischer Kurzschlussschalter der Überspannungsschutzeinrichtung aktiviert wird bzw. werden.

Aufgabe der Erfindung ist es, einen Überspannungsableiter bereitzustellen, der Gleichstromfolgeströme über einen weiten Stromstärkenbereich zuverlässig löschen kann. Insbesondere soll der Überspannungsableiter zudem kostengünstig realisierbar sein.

Die Aufgabe der Erfindung wird gelöst durch einen Überspannungsableiter für ein Gleichstromnetz umfassend eine Funkenstrecke zum Löschen von Netzfolgeströmen im Gleichstromnetz, deren Stromstärke gleich oder größer ist als eine festgelegte Stromschwelle, und eine der Funkenstrecke zugeordnete triggerbare Löschhilfe, die dazu eingerichtet ist, Netzfolgeströme unterhalb der festgelegten Stromschwelle zu löschen. Der Überspannungsableiter umfasst ferner ein Auswertemodul zum Triggern der Löschhilfe, wobei das Auswertemodul dazu eingerichtet ist, die Löschhilfe zu triggern, sobald wenigstens zwei Auslösebedingungen erfüllt sind, die charakteristisch dafür sind, dass die Funkenstrecke allein den Netzfolgestrom innerhalb einer festgelegten Zeitdauer nicht löschen kann.

Die Aufgabe der Erfindung wird ferner gelöst durch ein Verfahren zum Betreiben eines Überspannungsableiters für ein Gleichstromnetz, das folgende Schritte umfasst: Mittels eines Auswertemoduls des Überspannungsableiters wird detektiert, ob wenigstens zwei Auslösebedingungen erfüllt sind, die charakteristisch dafür sind, dass eine Funkenstrecke des Überspannungsableiters allein einen auftretenden Netzfolgestrom im Gleichstromnetz nicht innerhalb einer festgelegten Zeitdauer löschen kann. Falls dies der Fall ist, wird eine Löschhilfe des Überspannungsableiters mittels des Auswertemoduls getriggert.

Die Erfindung basiert auf dem Grundgedanken, die Löschhilfe lediglich dann zielgerichtet zu aktivieren, wenn die Funkenstrecke selbst nicht in der Lage ist, den auftretenden Netzfolgestrom innerhalb einer zuvor festgelegten Zeitdauer zu löschen. Das bedeutet, dass die Löschhilfe passiv bleibt im Fall von Impulsstrombelastungen sowie von Netzfolgeströmen, die von der Funkenstrecke selbst zuverlässig beherrscht werden können. Dies ermöglicht es, dass die Komponenten der Löschhilfe lediglich auf Belastungen mit einer Stromstärke unterhalb der festgelegten Stromschwelle ausgelegt werden können, sodass die Kosten des erfindungsgemäßen Überspannungsableiters minimiert werden können, ohne die Zuverlässigkeit beim Ableiten von Impulsströmen und Löschen von Netzfolgeströmen zu beeinträchtigen.

Das Auswertemodul löst die Löschhilfe erfindungsgemäß lediglich dann aus, wenn mehrere charakteristische Auslösebedingungen erfüllt sind. Anders ausgedrückt ist das Auswertemodul dazu eingerichtet, die Löschhilfe zu aktivieren, sobald mehrere Bedingungen vorliegen, insbesondere mehrere Bedingungen in Bezug auf den Netzfolgestrom, bei denen die Funkenstrecke allein den Netzfolgestrom innerhalb der festgelegten Zeitdauer nicht löschen kann.

Die zu betrachtenden Auslösebedingungen sind auf die jeweils eingesetzte Art und Funktionsweise der Funkenstrecke und der Löschhilfe angepasst.

Die Art der Funkenstrecke ist grundlegend nicht weiter eingeschränkt, sodass der erfindungsgemäße Überspannungsableiter flexibel an den jeweils angedachten Einsatzort anpassbar ist.

In einer Variante ist die Funkenstrecke eine Hörnerfunkenstrecke oder ein Gasableiter. Derartige Funkenstrecken sind besonders dazu geeignet, Impulsströme zuverlässig zu handhaben und sind weltweit kostengünstig verfügbar.

Bevorzugt ist die Funkenstrecke eine Hörnerfunkenstrecke, die einen Zündbereich zum Zünden eines Lichtbogens, eine Löschkammer zum Löschen des Lichtbogens sowie einen zwischen Zündbereich und Löschkammer angeordneten Laufbereich umfasst, durch den der Lichtbogen laufen kann, um vom Zündbereich in die Löschkammer zu gelangen.

In einer weiteren Variante ist die Funkenstrecke eine Funkenstrecke, die auf dem Prinzip eines Druckaufbaus oder einer Gasströmung in einem Lichtbogenkanal arbeitet.

Ein Aspekt sieht demnach vor, dass die Löschhilfe passiv bleibt, wenn die Funkenstrecke selbst in der Lage ist, den auftretenden Netzfolgestrom innerhalb der zuvor festgelegten Zeitdauer zu löschen, und wobei die Löschhilfe aktiviert wird, wenn die Funkenstrecke selbst nicht in der Lage ist, den auftretenden Netzfolgestrom innerhalb der zuvor festgelegten Zeitdauer zu löschen. Mit anderen Worten weist der Überspannungsableiter einen aktiven Betriebsmodus (mit aktivierter Löschhilfe) und einen passiven Betriebsmodus (mit passiver Löschhilfe) auf. Allerdings wird sowohl im passiven Betriebsmodus als auch im aktiven Betriebsmodus ein Netzfolgestrom gelöscht, nämlich entweder durch die Funkenstrecke selbst oder durch Unterstützung der aktivierten Löschhilfe.

Die wenigstens zwei Auslösebedingungen können auf zumindest zwei der nachfolgenden Parameter basieren: ein Auftreten, eine Bewegung und/oder eine Brenndauer eines Lichtbogens in der Funkenstrecke, ein Auslösen einer Zündhilfe der Funkenstrecke, ein Stromfluss im dem Überspannungsableiter zugeordneten Pfad des Gleichstromnetzes und ein Unterschreiten der festgelegten Stromschwelle im dem Überspannungsableiter zugeordneten Pfad des Gleichstromnetzes, insbesondere nach der festgelegten Zeitdauer.

Das Auftreten, die Bewegung und/oder die Brenndauer eines Lichtbogens sind in besonderem Maße dazu geeignet, das Verhalten der Funkenstrecke zu bestimmen.

An welcher Stelle und in welcher Form der Lichtbogen auftritt und inwiefern sich der Lichtbogen bewegt, hängt von der jeweils eingesetzten Art der Funkenstrecke ab.

Tritt kein Lichtbogen auf, kann dies ein Anzeichen dafür sein, dass die Stromschwelle nicht erreicht ist. In diesem Fall muss lediglich über eine weitere Bedingung festgestellt werden, ob über die Löschhilfe ein Strom mit einer Stromstärke unterhalb des Schwellenwerts gehandhabt werden muss oder nicht.

Die Bewegung und/oder die Brenndauer des Lichtbogens erlauben bzw. erlaubt einen Rückschluss auf die vorliegende Stromstärke eines Impuls- oder Netzfolgestroms, wobei eine höhere Stromstärke im Allgemeinen zu einer schnelleren Bewegung und einer kürzeren Brenndauer des Lichtbogens führt.

Insbesondere kann als Auslösebedingung festgestellt werden, dass der Lichtbogen im Zündbereich verharrt. Dies kann auf einen Netzfolgestrom unterhalb der festgelegten Stromschwelle und/oder auf Alterungseffekte der Funkenstrecke zurückzuführen sein, die eine Unterstützung der Funkenstrecke durch die Löschhilfe bedingt.

Das Auslösen einer Zündhilfe der Funkenstrecke lässt Rückschlüsse auf den Beginn des Auftretens eines Lichtbogens in der Funkenstrecke zu. Beispielsweise kann die Zündhilfe einen Gasableiter umfassen, dessen Zündung als Signal zum Auslösen der Zündhilfe genutzt wird. Zu diesem Zweck kann der Zündhilfe ein optischer Sensor und/oder ein Magnetfeldsensor zugeordnet sein. Auch kann eine transformatorisch erzeugte Spannung oder eine Spannungsänderung der Komponenten der Zündhilfe bei Strombelastung als Signal genutzt werden, das das Auslösen der Zündhilfe anzeigt.

Der Stromfluss im dem Überspannungsableiter zugeordneten Pfad des Gleichstromnetzes (auch als "Hauptpfad" bezeichnet) erlaubt es, darauf zu schließen, ob überhaupt oder immer noch ein relevanter Impuls- oder Netzfolgestrom gehandhabt werden muss. Dies ist von besonderer Bedeutung, da Überspannungsableiter im Querzweig des Gleichstromnetzes eingesetzt werden, und somit üblicherweise jeglicher Stromfluss im Querzweig als Fehlerstrom einzustufen ist, der bei entsprechender Höhe und Dauer nachgeschaltete Einrichtungen zum Anlagen- bzw. Personenschutz auslösen und zu ungewollten Netzunterbrechungen führen kann.

Um Netzfolgeströme niedriger Stromstärke zuverlässig handhaben zu können, kann insbesondere das Unterschreiten der festgelegten Stromschwelle in dem dem Überspannungsableiter zugeordneten Pfad des Gleichstromnetzes nach der festgelegten Zeitdauer als Auslösebedingung herangezogen werden.

Insofern können die wenigstens zwei Auslösebedingungen auf unterschiedlichen Parametern basieren, die insbesondere unterschiedlich erfasst werden.

Der Überspannungsableiter kann einen optischen Sensor zum Erfassen eines Lichtbogens in der Funkenstrecke, einen Stromsensor zum Messen von Stromstärken im Gleichstromnetz und/oder einen Spannungssensor umfassen, der bzw. die signalübertragend mit dem Auswertemodul verbunden ist bzw. sind. Es kann also ein Lichtbogen in der Funkenstrecke mittels eines optischen Sensors erfasst werden, eine Stromstärke im Gleichstromnetz mittels eines Stromsensors gemessen werden und/oder eine Spannung mittels Spannungssensor gemessen werden, wobei der optische Sensor, der Stromsensor und/oder der Spannungssensor zumindest einen Parameter erfassen bzw. erfasst, basierend worauf die wenigstens zwei Auslösebindungen überprüft werden.

Um die Kosten des Überspannungsableiters weiter zu reduzieren, können bzw. kann der optische Sensor, der Stromsensor und/oder der Spannungssensor als Schwellenwertsensor ausgebildet sein.

Der Überspannungsableiter kann über wenigstens einen optischen Sensor verfügen, um das Auftreten, die Bewegung und/oder die Brenndauer des Lichtbogens zu bestimmen. Der optische Sensor ist dazu eingerichtet, das vom Lichtbogen ausgesandte Licht zu detektieren, sodass beispielsweise über ein charakteristisches Spektrum auf das Vorliegen und die Position des Lichtbogens geschlossen werden kann.

Der wenigstens eine optische Sensor kann insbesondere in der Löschkammer, im Zündbereich und/oder im Laufbereich der als Hörnerfunkenstrecke ausgebildeten Funkenstrecke angeordnet sein.

Es ist auch möglich, dass der Überspannungsableiter über optische Komponenten verfügt, die dazu eingerichtet sind, das vom Lichtbogen ausgesandte Licht zum wenigstens einen optischen Sensor zu leiten. Auf diese Weise kann der optische Sensor besonders flexibel positioniert werden, da dieser nicht unmittelbar am oder in der Nähe des Orts angebracht sein muss, an welchem der Lichtbogen auftritt. Insbesondere ermöglicht es eine solche Ausgestaltung, dass der optische Sensor hinter einem Blendenelement positioniert sein kann, sodass der Einfluss von Störquellen auf die vom optischen Sensor durchgeführte Messung minimiert werden kann.

Ferner kann der Überspannungsableiter wenigstens einen Magnetfeldsensor umfassen, der dazu eingerichtet ist, den Lichtbogen über das vom Lichtbogen hervorgerufene Magnetfeld zu detektieren und/oder zu orten.

Auch kann einem Bauteil der Funkenstrecke ein Stromsensor zugeordnet sein, wobei über die vom Stromsensor detektierte Stromstärke auf einen Lichtbogen und insbesondere dessen Position zurückgeschlossen werden kann.

Um zu detektieren, dass der Lichtbogen die Löschkammer erreicht hat, kann in der Löschkammer eine Sonde zum Erfassen von Teilströmen des Lichtbogens vorhanden sein.

Bezüglich Möglichkeiten, das Verhalten eines Lichtbogens zu bewerten, wird zudem auf die DE 10 2019 210 236 A1, die DE 10 2019 210 234 B3, die DE 10 2019 101 212 A1 und die DE 10 2019 101 200 A1 verwiesen, in denen die Bewertung des Schaltverhaltens einer Funkenstrecke zum Zweck der Abtrennung der Funkenstrecke vom Netz ermittelt wird.

Die festgelegte Stromschwelle ist im Hinblick auf die jeweilige Ausgestaltung der Funkenstrecke und der Löschhilfe festgelegt. Insbesondere ist die festgelegte Stromschwelle ein Strom mit der kleinsten Stromstärke, der innerhalb der festgelegten Zeitdauer zuverlässig von der Funkenstrecke gelöscht wird. Somit bestimmt die Stromschwelle das benötigte Mindestlöschvermögen der Löschhilfe.

In einer Variante ist die festgelegte Stromschwelle kleiner 100 A.

Beispielsweise liegt die festgelegte Stromschwelle in einem Bereich von 1 bis 100 A. Bei Netzfolgeströmen mit einer Stromstärke von 100 A oder mehr steigt das Löschvermögen üblicher Funkenstrecken ausreichend an, sodass die Löschhilfe zunehmend seltener zum Einsatz kommen müsste.

Die festgelegte Zeitdauer richtet sich insbesondere danach, wie lange ein Strom unterhalb der Stromschwelle höchstens über die Funkenstrecke fließen darf, bevor nachgeschaltete Einrichtungen zum Anlagen- bzw. Personenschutz ausgelöst und/oder nachgeschaltete Komponenten des Gleichstromnetzes beschädigt werden. Dies kann von jeweiligen Anwendungsfall bzw. Einsatzgebiet anhängen.

In einer Variante ist die festgelegte Zeitdauer, die insbesondere die Soll-Gesamtabschaltzeit von der Zündung der Funkenstrecke bis zur Abschaltung eines möglichen Netzfolgestroms angibt, kürzer als 10 ms.

Beispielsweise liegt die festgelegte Zeitdauer im Bereich von 1 ms bis 10 ms. Der erfindungsgemäße Überspannungsableiter gestattet es, auch bei derart kurzen Zeitdauern Netzfolgeströme unterhalb der festgelegten Stromschwelle zuverlässig über die Löschhilfe zu löschen, ohne auf unwirtschaftlich kostspielige Komponenten zurückgreifen zu müssen.

Die Löschhilfe kann eine Hybridschaltung, eine Snubberschaltung, eine Gegenstromschaltung, ein aktiver Resonanzkreis und/oder ein passiver Resonanzkreis sein.

Um die Funkenstrecke und/oder die Löschhilfe vor Beschädigungen aufgrund nicht beherrschbarer Ströme zu schützen, kann der Überspannungsableiter eine Backup-Schutzvorrichtung aufweisen, die dazu eingerichtet ist, die Funkenstrecke und/oder die Löschhilfe vom Gleichstromnetz zu trennen, falls in dem dem Überspannungsableiter zugeordneten Pfad des Gleichstromnetzes ein Strom auftritt, der zu einer Beschädigung der Funkenstrecke und/oder Löschhilfe führen würde. Insofern kann die Funkenstrecke und/oder die Löschhilfe vom Gleichstromnetz getrennt werden, falls im dem Überspannungsableiter zugeordneten Pfad des Gleichstromnetzes ein Strom auftritt, der zu einer Beschädigung der Funkenstrecke und/oder der Löschhilfe führen würde.

Die Backup-Schutzvorrichtung kann aktiv oder passiv auslösbar sein.

Beispielsweise umfasst die Backup-Schutzvorrichtung einen Schalter, der in Serie zur Funkenstrecke geschaltet ist und dazu eingerichtet ist, die Funkenstrecke vom Gleichstromnetz zu trennen, falls in dem dem Überspannungsableiter zugeordneten Pfad des Gleichstromnetzes ein Strom auftritt, der zu einer Beschädigung der Funkenstrecke führen würde.

Ferner kann die Backup-Schutzvorrichtung einen Kurzschließer aufweisen, der parallel zur Löschhilfe geschaltet ist.

Ein weiterer Aspekt sieht vor, dass das Auswertemodul über ein Maschinenlernmodul verfügt, das dazu eingerichtet ist, die festgelegte Stromschwelle, die festgelegte Zeitdauer und/oder die berücksichtigten Auslösebedingungen anhand eines Trainingsdatensatzes und/oder eines Datensatzes anzupassen, der Informationen zu vom Überspannungsableiter in der Vergangenheit gehandhabten Netzfolgeströmen umfasst. Die Funktionsweise des Überspannungsableiters kann somit angepasst während, insbesondere kontinuierlich. Alterungseffekte der verwendeten Komponenten oder sich verändernde Einflüsse können somit berücksichtigt oder sogar kompensiert werden. Insgesamt wird dadurch stets eine bedarfsgerechte Aktivierung der Löschhilfe gewährleistet.

Ferner können Parameter für die Funktionsweise des Überspannungsableiters kontinuierlich angepasst werden. Bei den Parametern kann es sich unter anderem um Auslösebedingungen, Schwellenwerte und/oder Verzugszeiten. Die kontinuierliche Anpassung (Adaption) kann dabei basierend auf dem vom wenigstens einen Sensor erfassten Sensorwert oder aufgrund von Abschätzungen erfolgen, insbesondere mittels eines Maschinenlernmoduls. Insofern kann ein selbstlernendes System hinterlegt sein, was unter anderem Algorithmen zur Aktivierung der Löschhilfe kontinuierlich anpasst, um so eine bedarfsgerechte Aktivierung der Löschhilfe zu gewährleisten.

Es können Informationen zum erwarteten Verhalten der Funkenstrecke berücksichtigt werden, um zu festzustellen, ob die Funkenstrecke allein den auftretenden Netzfolgestrom im Gleichstromnetz innerhalb der festgelegten Zeitdauer löschen kann oder nicht. Diese Informationen können im Auswertemodul hinterlegt sein. Die erfassten Messdaten, insbesondere die von dem wenigstens einen Sensor, werden zusammen mit den hinterlegten Informationen genutzt, um zu bestimmen, ob die Funkenstrecke allein den auftretenden Netzfolgestrom im Gleichstromnetz in der definierten Zeitdauer löschen kann oder nicht. In Abhängigkeit davon wird die Löschhilfe getriggert oder nicht, also aktiviert oder passiv belassen.

Die Löschhilfe kann als separates Modul ausgebildet sein, das zur Funkenstrecke parallel geschaltet oder das mit der Funkenstrecke in Reihe geschaltet ist.

Dies ermöglicht eine besonders flexible Zuordnung der Löschhilfe zu einer Funkenstrecke im Gleichstromnetz. Auf diese Weise können auch bei Bedarf bereits vorhandene Überspannungsableiter nachträglich und flexibel mit der Löschhilfe versehen bzw. um diese erweitert werden.

Das separate Modul kann in einer weiteren Ausgestaltung eine Parallelschaltung einer Funkenstrecke, insbesondere eines Gasableiters, und einer Löschhilfe umfassen. Ein solch separates Modul kann weiteren strombegrenzenden Überspannungsschutzgeräten auf einfache Weise in Reihe geschaltet werden, um die weiteren strombegrenzenden Überspannungsschutzgeräte hinsichtlich ihres Gleichstromlöschvermögens (auch als "DC-Löschvermögen" bezeichnet) zu ertüchtigen. Insbesondere ermöglicht es diese Ausgestaltung, dass DC-Löschvermögen der weiteren strombegrenzenden Überspannungsschutzgeräten zu verbessern, ohne diese modifizieren zu müssen.

In einer Variante umfasst der Überspannungsableiter mehrere in Reihe geschaltete Funkenstrecken, wobei wenigstens einer der Funkenstrecken eine triggerbare Löschhilfe zugeordnet ist.

Weitere Merkmale und Eigenschaften der Erfindung ergeben sich aus der nachfolgenden Beschreibung beispielhafter Ausführungsformen, die nicht in einem einschränkenden Sinn verstanden werden sollen, sowie aus den Zeichnungen. In diesen zeigen:
- Fig. 1 eine erste Ausführungsform eines erfindungsgemäßen Überspannungsableiters,
- Fig. 2 eine zweite Ausführungsform eines erfindungsgemäßen Überspannungsableiters,
- Fig. 3 ein Verlaufsdiagramm der Funktionsweise des Überspannungsableiters aus Fig. 2,
- Fig. 4 eine dritte Ausführungsform eines erfindungsgemäßen Überspannungsableiters,
- Fig. 5 ein Verlaufsdiagramm der Funktionsweise des Überspannungsableiters aus Fig. 4,
- Fig. 6 eine vierte Ausführungsform eines erfindungsgemäßen Überspannungsableiters,
- Fig. 7 eine fünfte Ausführungsform eines erfindungsgemäßen Überspannungsableiters,
- Fig. 8 eine sechste Ausführungsform eines erfindungsgemäßen Überspannungsableiters,
- Fig. 9 eine siebente Ausführungsform eines erfindungsgemäßen Überspannungsableiters,
- Fig. 10 eine achte Ausführungsform eines erfindungsgemäßen Überspannungsableiters, und
- Fig. 11 eine neunte Ausführungsform eines erfindungsgemäßen Überspannungsableiters.

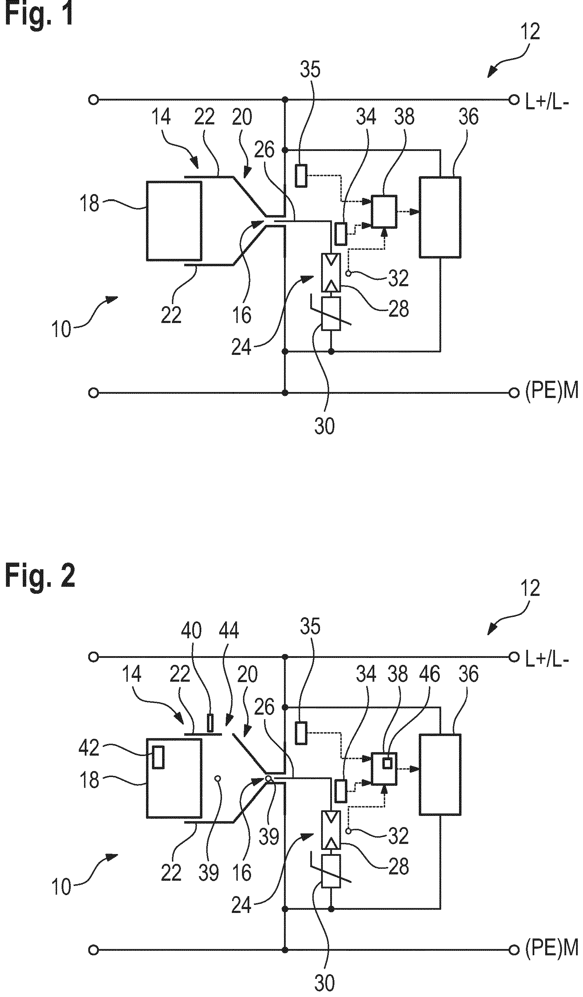

Fig. 1 zeigt eine erste Ausführungsform eines erfindungsgemäßen Überspannungsableiters 10.

Der Überspannungsableiter 10 ist Bestandteil eines Gleichstromnetzes 12 und ist im Querzweig zwischen einem ersten Leiter ("L+/L-") und einem zweiten Leiter ("(PE)M", also dem Neutral- bzw. Schutzleiter), angeordnet und mit diesen elektrisch verbunden. Der Querzweig wird im Folgenden auch als "Hauptpfad" bezeichnet.

Der Überspannungsableiter 10 umfasst eine Funkenstrecke 14, die dazu dient, im Gleichstromnetz 12 auftretende Netzfolgeströme zu löschen oder wenigstens zu begrenzen, deren Stromstärke gleich oder größer ist als eine festgelegte Stromschwelle. Zudem dient die Funkenstrecke 14 dazu, im Gleichstromnetz 12 auftretende Impulsströme zu führen und (sicher) abzuleiten.

In der gezeigten Ausführungsform ist die Funkenstrecke 14 als Hörnerfunkenstrecke ausgebildet, die einen Zündbereich 16 zum Zünden eines Lichtbogens, eine räumlich vom Zündbereich getrennte Löschkammer 18 zum Löschen des Lichtbogens und einen zwischen Zündbereich 16 und Löschkammer 18 angeordneten Laufbereich 20 umfasst. Der Laufbereich 20 verfügt über Laufschienen 22, entlang denen der Lichtbogen wandern und/oder sich ausdehnen kann, um zur Löschkammer 18 zu gelangen und in dieser gelöscht zu werden.

Es versteht sich, dass die als Hörnerfunkenstrecke ausgebildete Funkenstrecke 14 lediglich beispielhaft ist und erfindungsgemäß auch beliebige andere Arten von Funkenstrecken zum Einsatz kommen können.

Die Funkenstrecke 14 verfügt weiter über eine Zündhilfe 24, die über eine Zündhilfselektrode 26, einen Gasableiter 28 und einen Varistor 30 verfügt, die in Reihe geschaltet sind.

Die Zündhilfe 24 dient dazu, den Schutzpegel der Funkenstrecke 14 abzusenken.

Der Gasableiter 28 ist zudem ein optischer Sensor 32 zugeordnet, der dazu eingerichtet ist, einen innerhalb des Gasableiters 28 auftretenden Lichtbogen zu detektieren.

Ferner ist dem Pfad der Zündhilfe 24 ein erster Stromsensor 34 zugeordnet, der dazu eingerichtet ist, einen Stromfluss innerhalb des Pfads der Zündhilfe zu detektieren.

Dem Hauptpfad ist ein zweiter Stromsensor 35 zugeordnet, der im Gegensatz zum ersten Stromsensor 34 jedoch dazu eingerichtet ist, einen Stromfluss innerhalb des Hauptpfads zu detektieren und somit eine Aussage zum Strom zulässt, dem die Funkenstrecke 14 direkt ausgesetzt ist.

Parallel zur Hörnerfunkenstrecke ist als Bypass der Funkenstrecke 14 eine triggerbare Löschhilfe 36 geschaltet, die dazu eingerichtet ist, Netzfolgeströme unterhalb der festgelegten Stromschwelle zu löschen. Anders ausgedrückt dient die Löschhilfe 36 dazu, Netzfolgeströme zu handhaben, die von der Funkenstrecke 14 allein nicht ausreichend zuverlässig gelöscht werden können.

Dies schließt nicht aus, dass die Funkenstrecke 14 nicht auch Ströme löschen kann, die eine Stromstärke unterhalb der festgelegten Stromschwelle aufweisen. Vielmehr dient die Löschhilfe 36 dazu, die Zuverlässigkeit des Überspannungsableiters 10 beim Löschen derartiger Ströme zu erhöhen.

Die Art der Löschhilfe 36 kann an die jeweils angedachte Funktionsweise des Überspannungsableiters 10 angepasst sein. Beispielsweise ist die Löschhilfe 36 eine Hybridschaltung, eine Snubberschaltung, eine Gegenstromschaltung, ein aktiver Resonanzkreis und/oder ein passiver Resonanzkreis. Ferner kann die Löschhilfe 36 einen Gasableiter oder eine Funkenstrecke umfassen.

Die Löschhilfe 36 ist insbesondere als separates Modul ausgebildet, das der Funkenstrecke 14 parallel geschaltet ist.

Im Fall einer Hybridschaltung und einer aktiven Snubberschaltung wird bei Aktivierung der Löschhilfe 36 ein Strompfad zugeschaltet, welcher im Verhältnis zum Hauptpfad, das heißt zum der Funkenstrecke 14 zugeordneten Pfad, zumindest zeitweilig niederohmiger ist, so dass ein Stromfluss vom Hauptpfad in den Pfad der Löschhilfe 36 kommutiert und der Lichtbogen in der zugeordneten Funkenstrecke 14 verlöscht. Der Strom im niederohmigen Pfad der Löschhilfe 36 wird nach einer gewissen Zeit wieder unterbunden.

Bei der Nutzung des Gegenstromprinzips und bei Resonanzkreisen wird mindestens ein künstlicher Nulldurchgang des Stromes in der Funkenstrecke 14 herbeigeführt, wodurch der Strom des Gleichstromnetzes 12 gelöscht wird.

Hybridschaltungen (auch als "Hybridkreise" bezeichnet) sind beispielsweise aus der DE 10 2007 015 933 A1 und der DE 10 2016 211 628 A1 bekannt und basieren im Allgemeinen auf einem leistungsfähigen Halbleiter mit geringem Bahnwiderstand, welcher parallel zu einem Schaltkontakt oder einer Funkenstrecke angeordnet ist. Bei der Zuschaltung des Halbleiters kommutiert der Strom aus dem Schalter oder dem Funkenstreckenpfad auf den Halbleiter, wodurch ggf. vorhandene Lichtbögen erlöschen. Für die Kommutierung ist es notwendig, dass der Spannungsabfall bei einem Stromfluss im Halbleiter geringer ist als der Spannungsbedarf zur Aufrechterhaltung der Lichtbogenentladung. Die Kommutierungszeit wird unter anderem durch das Verhältnis der Impedanzen und der Koppelinduktivitäten zwischen Halbleiter und Schalter bzw. Funkenstrecke beeinflusst. Erst nach Abschluss der Kommutierung verfestigt sich die Schaltstrecke innerhalb einer Zeitdauer, welche unter anderem von der Belastungshöhe, der Trennstrecke und den eingesetzten Materialien abhängig ist. Der Halbleiter muss den Strom so lange führen, bis die Schaltstrecke soweit wiederverfestigt ist, dass der Halbleiter den Strom abschalten kann und die Trennstrecke infolge der bei der Abschaltung auftretenden Spannung nicht wieder zündet. Die Zeitdauer der Einschaltung des Halbleiters kann hierbei zeitgesteuert sein.

Als abschaltbare Halbleiter können sogenannte "IGBTs" (Abkürzung für engl. *"insulated-gate bipolar transistor*") zum Einsatz kommen. Jedoch können auch andere steuerbare Bauteile verwendet werden, welche im Rahmen der Anforderungen abschaltbar sind. Bei der Abschaltung beispielsweise von Halbleitern entstehen entsprechend dem zu schaltenden Strom und den Netzbedingungen im Gleichstromnetz 12 häufig sehr hohe Schaltspannungen, welche ohne weitere Maßnahmen zur Wiederzündung der Funkenstrecke 14 führen würden.

Die Hybridschaltung kann daher über verschiedene Maßnahmen zur Begrenzung der Überspannung verfügen. Hierbei können aktive Begrenzungsmaßnahmen und passive Maßnahmen eingesetzt sein. Übliche Maßnahmen sind die Parallelschaltung von Varistoren, Suppressordioden und Snubberschaltungen. Bei hinreichender Dimensionierung des Halbleiters kann durch das Vermeiden einer harten Abschaltung die Überspannung begrenzt werden, jedoch wird der Leistungsumsatz des Halbleiters dabei deutlich erhöht.

Bei Funkenstrecken ist es günstig, die Spannung zur Ansteuerung des Halbleiters aus der Lichtbogenspannung der Funkenstrecke entsprechend der DE 10 2007 015 933 A1 bereitzustellen.

Bei Gasableitern mit ihren im Vergleich zu anderen Arten von Funkenstrecken sehr niedrigen Bogenbrennspannungen muss hierbei ein Zusatzaufwand betrieben werden, da die benötigte Steuerspannung des Halbleiters zu hoch sein kann, insbesondere, wenn als Halbleiter ein IGBT eingesetzt ist.

Alternativ kann in der Hybridschaltung ein MOSFET (Abkürzung für engl. *"metal-oxide-semiconductor field-effect transistor"*) zum Einsatz kommen, insbesondere falls der Bahnwiderstand eines vergleichbar kostspieligen IGBTs bei den für den jeweiligen Überspannungsableiter 10 zu handhabenden Strömen und Spannungen derart hoch wird, dass eine zuverlässige Kommutierung in den Pfad der Löschhilfe 36 nicht mehr gewährleistet werden kann.

Die Löschhilfe 36 ist mit einem Auswertemodul 38 signalübertragend verbunden, sodass die Löschhilfe 36 vom Auswertemodul 38 getriggert werden kann.

Das Auswertemodul 38 ist erfindungsgemäß dazu eingerichtet, die Löschhilfe 36 lediglich dann zu triggern, wenn wenigstens zwei Auslösebedingungen erfüllt sind, die charakteristisch dafür sind, dass die Funkenstrecke 14 allein den Netzfolgestrom innerhalb einer festgelegten Zeitdauer nicht löschen kann.

Dazu kann das Auswertemodul 38 auf die vom optischen Sensor 32 und den Stromsensoren 34 und 35 erhaltenen Sensordaten zurückgreifen, sodass im Auswertemodul 38 erfasst wird, ob, wann, wie lange und/oder in welcher Höhe ein Strom durch den Hauptpfad bzw. durch den Pfad der Zündhilfe 24 fließt und ob, wann und/oder wie lange ein Lichtbogen in dem Gasableiter 28 auftritt. Es versteht sich, dass bei Einsatz anderer Arten oder Anordnungen von Sensoren als in Fig. 1 gezeigt das Auswertemodul 38 entsprechend auf Sensordaten zurückgreifen kann, die von diesen Sensoren erhalten werden.

Zudem können im Auswertemodul 38 Informationen zum erwarteten Verhalten der Funkenstrecke 14 hinterlegt sein, die es erlauben, aus den erhobenen Messdaten zu bestimmen, ob ein auftretender Netzfolgestrom von der Funkenstrecke 14 allein gelöscht werden kann oder ob die Löschhilfe 36 aktiviert werden muss.

Das Auswertemodul 38 kann eine analoge Schaltung oder einen Mikroprozessor umfassen.

Die festgelegte Stromschwelle ist beispielsweise kleiner 100 A. Bei derartigen Stromstärken ist das Laufverhalten von Lichtbögen in konventionellen Hörnerfunkenstrecken eingeschränkt, sodass nicht in jedem Fall davon ausgegangen werden kann, dass ein Netzfolgestrom unterhalb dieser Stromschwelle von der Funkenstrecke 14 gelöscht wird oder zumindest nicht innerhalb der festgelegten Zeitdauer.

Die festgelegte Zeitdauer bzw. die Gesamtabschaltzeit ist beispielsweise kürzer als 10 ms.

Es versteht sich, dass die festgelegte Stromschwelle und die festgelegte Zeitdauer auf die jeweils verwendete Funkenstrecke 14 und Löschhilfe 36 abgestimmt sein müssen und auch andere als die zuvor genannten Werte in Frage kommen. Der erfindungsgemäße Überspannungsableiter 10 gestattet es jedoch, die vom Auswertemodul 38 in Betracht gezogenen Auslösebedingungen flexibel und zielgenau an die jeweiligen Komponenten des Überspannungsableiters 10 anzupassen, sodass im Gleichstromnetz 12 auftretende Netzfolgeströme zuverlässig gelöscht werden können.

Im Folgenden werden weitere Ausführungsformen des erfindungsgemäßen Überspannungsableiters 10 näher beschrieben, wobei jeweils lediglich auf Unterschiede zur ersten bzw. zu vorherigen Ausführungsformen eingegangen wird. Gleiche Bezugszeichen kennzeichnen jeweils gleiche oder funktionsgleiche Bauteile und es wird auf die Ausführungen zu den jeweils bereits zuvor beschriebenen Ausführungsformen verwiesen. Es versteht sich, dass die Elemente der verschiedenen Ausführungsformen beliebig miteinander kombiniert werden können, sofern eine solche Kombination nicht der beschriebenen Funktionsweise des Überspannungsableiters 10 entgegensteht.

In Fig. 2 ist eine zweite Ausführungsform des erfindungsgemäßen Überspannungsableiters 10 dargestellt.

In der zweiten Ausführungsform sind der Funkenstrecke 14 beispielhaft weitere Mittel zugeordnet, um das Auftreten und das Verhalten eines Lichtbogens in der Hörnerfunkenstrecke zu bestimmen.

Dazu weist die Funkenstrecke 14 zwei optische Sensoren 39, einen Magnetfeldsensor 40 sowie eine der Löschkammer 18 zugeordnete Sonde 42 zum Erfassen von Teilströmen des Lichtbogens in der Löschkammer 18 auf. Anders ausgedrückt können Messdaten eines oder mehrerer der Sensoren zur Beurteilung des Lichtbogenverhaltens genutzt werden.

Einer der optischen Sensoren 39 ist dem Zündbereich 16 zugeordnet, sodass dieser optische Sensor insbesondere Informationen darüber liefern kann, ob überhaupt ein Lichtbogen auftritt und ob dieser den Zündbereich 16 verlässt oder in diesem verharrt.

Ein weiterer der optischen Sensoren 39 ist dem Laufbereich 20 zugeordnet und liefert insbesondere Informationen zur Position, zur Bewegung und zur Ausdehnung des Lichtbogens.

Der Magnetfeldsensor 40 ist dazu eingerichtet, dass vom Lichtbogen hervorgerufene Magnetfeld zu detektieren und liefert auf diese Weise ebenfalls Informationen zum Verhalten des Lichtbogens.

Über die Sonde 42 kann detektiert werden, ob und wann der Lichtbogen bis zur Löschkammer 18 gelangt ist.

In einer besonders einfachen Ausgestaltung kann die Sonde 42 dazu ausgelegt sein, das Potential oder Potentialdifferenzen zu erfassen. Auch kann die Sonde 42 so ausgestaltet sein, dass sich innerhalb der Löschkammer 18 ein Teillichtbogen zur Sonde 42 ausbilden kann, wobei die Sonde 42 dazu eingerichtet ist, die Stromstärke des über den Teillichtbogen fließenden Stroms zu bestimmen.

Ferner weist in der zweiten Ausführungsform eine der Laufschienen 22 eine Unterbrechung 44 auf, die die Positionsbestimmung des Lichtbogens weiter vereinfacht, da ein Stromfluss oder ein Potential in dem Teil der Laufschiene 22, der hinter der Unterbrechung 44 auf dem Weg zur Löschkammer 18 liegt, erst nach Bewegung des Lichtbogens in diesen Teil zu erwarten ist, wodurch dieser Stromfluss bzw. dieses Potential mit entsprechenden Sensoren (leicht) zu detektieren ist.

Zudem verfügt das Auswertemodul 38 in der zweiten Ausführungsform über ein Maschinenlernmodul 46, auf dessen Funktion später noch näher eingegangen wird.

Es versteht sich, dass zur Beurteilung des Zündens, der Bewegung des Lichtbogens in der Funkenstrecke 14 und somit deren Funktionsweise verschiedene Arten von Sensoren bzw. Sonden und deren Kombination genutzt werden können. Es können hierzu unter anderem optische Sensoren, Magnetfeldsensoren, Strom- und/oder Spannungssensoren verwendet werden, die auch anders angeordnet sein können als dies im Zusammenhang mit Fig. 2 beschrieben ist.

Die notwendige Anzahl der Sensoren kann in Abhängigkeit von der Nutzung von Sensoren in dem der Zündhilfe 24 zugeordneten Schaltkreis bzw. im Hauptstromkreis auch auf einen oder zwei Sensoren begrenzt bleiben, wodurch der Aufwand zum Gewinnen von Informationen zur Lichtbogenbewegung innerhalb der Funkenstrecke 14 gering ist.

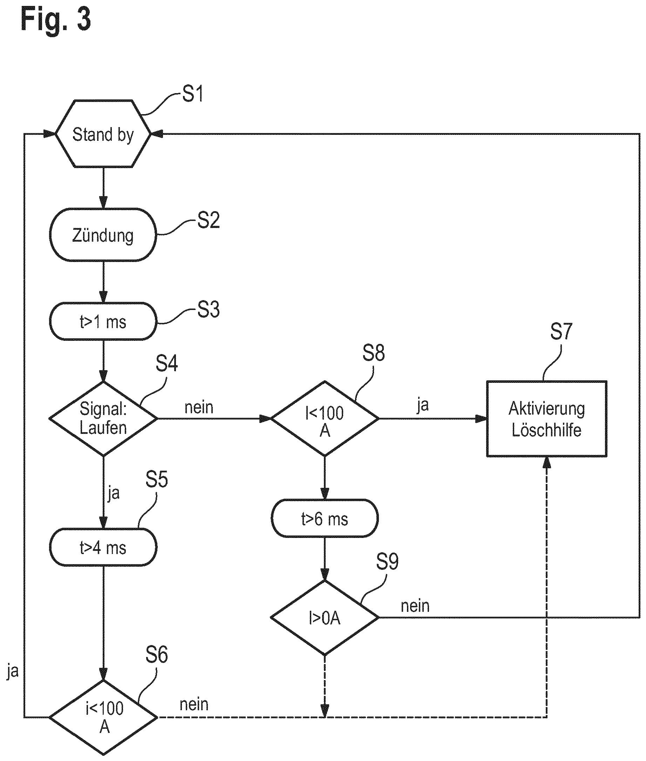

Im Folgenden wird die Funktionsweise des Überspannungsableiters 10 gemäß der zweiten Ausführungsform anhand des in Fig. 3 dargestellten Verlaufsdiagramms näher beschrieben.

Im normalen Betrieb des Gleichstromnetzes 12 befindet sich der erfindungsgemäße Überspannungsableiter 10 im Stand-by (vgl. Schritt S1 in Fig. 3).

Sofern eine hinreichend hohe Überspannung im Gleichstromnetz 12 auftritt, wird in die Funkenstrecke 14 über die Zündhilfe 24 und die Zündhilfselektrode 26 ein Stromfluss in die Funkenstrecke 14 eingebracht. Infolge des Impuls- oder Netzfolgestroms kann im Zündbereich 16 ein Lichtbogen gezündet werden (vgl. Schritt S2 in Fig. 3).

Die weiteren dargestellten Schritte dienen dazu, zu bewerten, ob der gezündete Lichtbogen in die Löschkammer 18 einlaufen kann, um dort gelöscht zu werden, oder ob die Löschhilfe 36 aktiviert werden muss.

Zunächst wird eine erste Verzugszeit von 1 ms abgewartet, bevor das Verhalten des gezündeten Lichtbogens bewertet wird (vgl. Schritt S3 in Fig. 3). Auf diese Weise wird vermieden, dass die Löschhilfe 36 unnötigerweise direkt zugeschaltet wird, obwohl die Funkenstrecke 14 allein den auftretenden Netzfolgestrom handhaben kann.

Anschließend findet mittels des Auswertemoduls 38 eine Bewertung zum Laufverhalten des Lichtbogens statt (vgl. Schritt S4 in Fig. 3). Dazu kann das Auswertemodul 38 auf alle Informationen der Sensoren des Überspannungsableiters 10 zurückgreifen, das heißt insbesondere auf die Informationen der optischen Sensoren 32 und 39, der Stromsensoren 34 und 35, des Magnetfeldsensors 40 und der Sonde 42.

Wird festgestellt, dass der Lichtbogen wenigstens beginnt zu laufen, das heißt sich aus dem Zündbereich 16 in Richtung der Löschkammer 18 zu bewegen, wird eine zweite Verzugszeit von 4 ms abgewartet (vgl. Schritt S5 in Fig. 3). Die zweite Verzugszeit ist derart gewählt, dass diese einer üblichen Löschzeit der Funkenstrecke 14 entspricht, in der diese Impulsströme sicher ableitet und Netzfolgeströme oberhalb der festgelegten Stromschwelle üblicherweise löscht oder wenigstens auf ein Maß begrenzt, bei welchem im Gleichstromnetz 12 (nicht dargestellte) nachgeschaltete Einrichtungen zum Personen- und Anlagenschutz nicht ausgelöst werden. Während der zweiten Verzugszeit wird die Löschhilfe 36 nicht zugeschaltet, sodass deren Komponenten nicht dem momentanen Impuls- oder Netzfolgestrom ausgesetzt sind.

Nachdem die zweite Verzugszeit verstrichen ist, wird die Höhe des über den Hauptpfad fließenden Stromes bewertet, das heißt des Stromes, der über die Funkenstrecke 14 fließt (vgl. Schritt S6 in Fig. 3).

Weist dieser Strom eine Stromstärke unterhalb der festgelegten Stromschwelle auf, das heißt im vorliegenden Fall von unterhalb 100 A, wird davon ausgegangen, dass der bereits laufende Lichtbogen in ausreichendem Maße und in ausreichender Zeit von der Funkenstrecke 14 allein begrenzt wird und die Löschhilfe 36 wird nicht aktiviert. Der Überspannungsableiter 10 geht daher wieder in den Stand-By.

Liegt der Strom nach der zweiten Verzugszeit jedoch oberhalb der Stromschwelle, wird davon ausgegangen, dass die Funkenstrecke allein nicht innerhalb der festgelegten Zeitdauer (im vorliegenden Fall innerhalb von 10 ms oder weniger) den auftretenden Netzfolgestrom in ausreichendem Maß handhaben kann und die Löschhilfe 36 kann zusätzlich aktiviert werden (vgl. Schritt S7) in Fig. 3.

Durch dieses Vorgehen kann die Gefahr einer Fehlauslösung der Löschhilfe 36 ausgeschlossen oder zumindest reduziert werden.

Wurde bereits vom Auswertemodul 38 festgestellt, dass der gezündete Lichtbogen nicht zumindest begonnen hat zu laufen, findet unmittelbar eine Bewertung des über den Hauptpfad fließenden Stromes statt, das heißt, ohne die zweite Verzugszeit abzuwarten (vgl. Schritt S8 in Fig. 3).

Wird festgestellt, dass der Netzfolgestrom bereits zu diesem Zeitpunkt unterhalb der festgelegten Stromschwelle liegt, wird die Löschhilfe 36 unmittelbar aktiviert (vgl. Schritt S7 in Fig. 3), um den Netzfolgestrom schnellstmöglich und sicher innerhalb der festgelegten Zeitdauer zu begrenzen.

Ist die Stromstärke oberhalb der festgelegten Stromschwelle, wird die Löschhilfe 36 nicht unmittelbar zugeschaltet, um die Komponenten der Löschhilfe 36 vor einer potentiellen Belastung mit zu hohen Strömen zu schützen. Stattdessen wird zunächst eine dritte Verzugszeit von 6 ms abgewartet und anschließend mittels der Sensoren bewertet, ob nach der dritten Verzugszeit noch ein Strom über den Hauptpfad fließt, beispielsweise mittels des Stromsensors 35 und/oder der optischen Sensoren 39 (vgl. Schritt S9 in Fig. 3). Anders ausgedrückt wird überprüft, ob die Funkenstrecke 14 allein den Lichtbogen innerhalb der dritten Verzugszeit zwischenzeitlich bereits gelöscht hat.

Ist dies der Fall, geht der Überspannungsableiter 10 wieder in den Stand-By. Wird jedoch weiterhin ein über den Hauptpfad fließender Strom detektiert, kann auch die Löschhilfe 36 aktiviert werden, um die Funkenstrecke 14 zu unterstützen und somit zu versuchen, dass der Netzfolgestrom noch innerhalb der festgelegten Zeitdauer gelöscht werden kann.

Inwieweit die Aktivierung der Löschhilfe 36 bei Ermittlung einer Stromhöhe größer als die festgelegte Stromschwelle nach Schritt S6 bzw. S9 erfolgen oder eher vermieden werden sollte, hängt von der Auslegung der Überlastfähigkeit der Funkenstrecke 14, der Löschhilfe 36 und optional vorhandenen weiteren internen und externen Schutzmaßnahmen ab.

Aus dem zuvor beschriebenen Ablauf folgt, dass die erste Verzugszeit, die zweite Verzugszeit und die dritte Verzugszeit sowie die Summe aus erster Verzugszeit und zweiter Verzugszeit kürzer gewählt sein müssen als die festgelegte Zeitdauer.

Es versteht sich jedoch, dass die festgelegte Stromschwelle, die festgelegte Zeitdauer sowie die erste bis dritte Verzugszeit je nach Bedarf angepasst werden können.

Entsprechend ist das Auswertemodul 38 dazu eingerichtet, die für die Funktionsweise des Überspannungsableiters 10 herangezogenen Auslösebedingungen, Schwellenwerte und/oder Verzugszeiten anzupassen, insbesondere basierend auf in der Vergangenheit vom Überspannungsableiter 10 gehandhabten Netzfolgeströmen, die in Form eines Datensatzes im Auswertemodul 38 hinterlegt werden.

Zu diesem Zweck kann das Auswertemodul 38 auf das Maschinenlernmodul 46 zurückgreifen, das dazu eingerichtet ist, die jeweiligen Parameter anhand des Datensatzes anzupassen. Auf diese Weise ist eine Anpassung der Funktionsweise des Überspannungsableiters 10 an die realen Bedingungen des Gleichstromnetzes 12 am Einbauort des Überspannungsableiters 10 und über dessen Lebensdauer hinweg möglich. Anders ausgedrückt wird über das Maschinenlernmodul 46 sichergestellt, dass eine kontinuierliche Anpassung (Adaption) erfolgt.

Besonders vorteilhaft wird auf diese Weise überprüft, ob die festgelegte Zeitdauer verkürzt werden kann und/oder ob die Löschhilfe 36 zuverlässig lediglich bei zwingendem Bedarf zugeschaltet wird.

Insbesondere findet die Anpassung automatisiert statt, sodass auf den Eingriff eines Benutzers verzichtet werden kann.

Es versteht sich, dass der in Fig. 3 gezeigte Ablaufplan lediglich beispielhaft für die herangezogenen Auslösebedingungen und Kriterien ist. Selbstredend können diese an die spezifische Ausgestaltung der Funkenstrecke 14, der Zündhilfe 24, der Löschhilfe 36 sowie der verfügbaren und betrachteten Sensoren angepasst werden. Beispielsweise kann das Auswertemodul 38 neben den Verzugszeiten, der festgelegten Zeitdauer und der festgelegten Stromschwelle auch auf Energien, Gradienten, Ladungen, Impedanzen oder andere Größen zurückgreifen, die das Verhalten des Überspannungsableiters 10 charakterisieren.

Es ist auch möglich, dass auf zusätzliche Messgrößen, die auf die Löschhilfe 36 zurückgehen, zurückgegriffen wird, beispielsweise auf die Stromstärke bzw. deren Gradient eines über die Löschhilfe 36 fließenden Stroms.

Aus dem Anstieg der Stromstärke durch die Funkenstrecke 14 lassen sich Informationen gewinnen, inwieweit bereits eine Strombegrenzung erfolgt oder der Strom noch ansteigt. Aus diesen Informationen sind Rückschlüsse möglich, inwieweit die Zuschaltung der Löschhilfe 36 bereits vorzeitig sinnvoll ist oder bei einer Zuschaltung infolge des Stromanstiegs die Gefahr einer Überlastung droht.

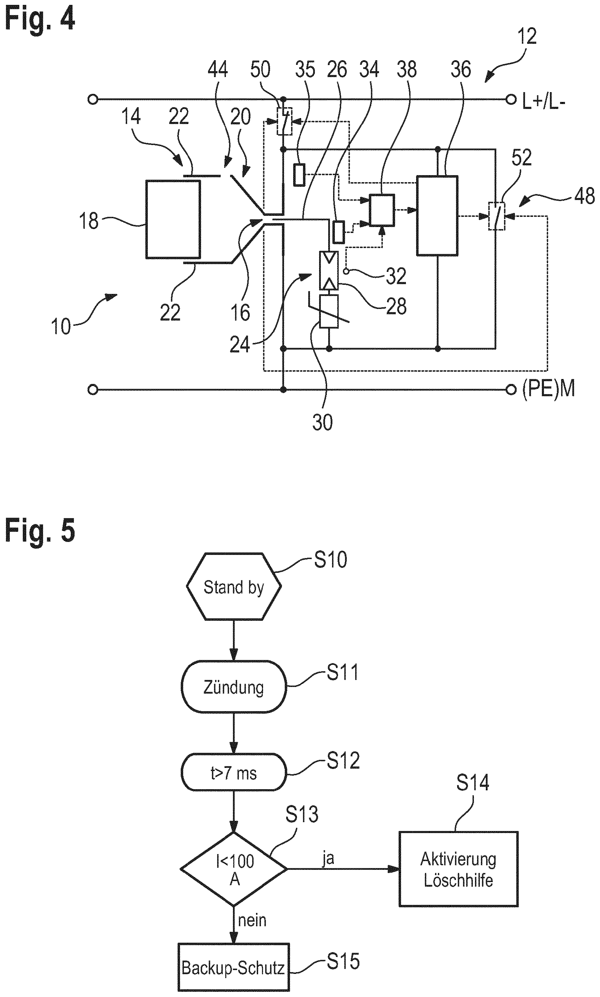

In Fig. 4 ist eine dritte Ausführungsform dargestellt, die im Wesentlichen analog zur ersten Ausführungsform ausgestaltet ist.

Zusätzlich verfügt der Überspannungsableiter 10 jedoch über eine Backup-Schutzvorrichtung 48, die über ein Schaltelement 50 und einen aktivierbaren Kurzschließer 52 verfügt. Es ist auch möglich, dass lediglich das Schaltelement 50 vorgesehen ist.

Das Schaltelement 50 ist wenigstens einmal aktivierbar und dient als Schalter bzw. Sicherung, um die Funkenstrecke 14 bei Bedarf sicher vom restlichen Gleichstromnetz 12 zu trennen.

Grundlegend ist es auch möglich, dass das Schaltelement 50 ein passives Schaltelement ist, das beispielsweise auf Basis einer Zeit-Strom-Kennlinie oder einer Kurzschlussschaltung auslösbar ist.

Der Kurzschließer 52 ist parallel zur Löschhilfe 36 geschaltet und dient dazu, Ströme an der Funkenstrecke 14 und der Löschhilfe 36 vorbei abzuleiten, wenn der Kurzschließer 52 aktiviert ist.

Das Schaltelement 50 sowie der Kurzschließer 52 sind mit dem Auswertemodul 38 und der Löschhilfe 36 signalübertragend verbunden und können sowohl vom Auswertemodul 38 als auch von der Löschhilfe 36 ausgelöst werden.

Es ist auch möglich, dass das Schaltelement 50 und/oder der Kurzschließer 52 dazu eingerichtet sind, von weiteren Einrichtungen der Funkenstrecke 14 ausgelöst zu werden, die beispielsweise auf Verschleiß, Erwärmung, Druck und/oder Schmelzintegrale reagieren können.

Alternativ oder zusätzlich können das Schaltelement 50 und/oder der Kurzschließer 52 ausgelöst werden, wenn eine Überlastung der Löschhilfe 36 droht.

In Fig. 5 ist ein Verlaufsdiagramm dargestellt, dass eine mögliche Funktionsweise des Überspannungsableiters 10 gemäß der dritten Ausführungsform beschreibt.

Im normalen Betrieb des Gleichstromnetzes 12 befindet sich der erfindungsgemäße Überspannungsableiter 10 im Stand-by (vgl. Schritt S10 in Fig. 5).

Sofern eine hinreichend hohe Überspannung im Gleichstromnetz 12 auftritt, welche die Funkenstrecke 14 auslöst, wird im Zündbereich 16 ein Lichtbogen gezündet (vgl. Schritt S11 in Fig. 5). Dies kann dadurch detektiert werden, dass ein Strom über den Pfad der Zündhilfe 24 fließt wie über den Stromsensor 34 ermittelt werden kann.

Die weiteren dargestellten Schritte dienen dazu, zu bewerten, ob der gezündete Lichtbogen in die Löschkammer 18 einlaufen kann, um dort gelöscht zu werden, ob die Löschhilfe 36 aktiviert oder die Backup-Schutzvorrichtung 48 aktiviert werden muss.

Zunächst wird eine erste Verzugszeit von 7 ms abgewartet, bevor der über den Hauptpfad fließende Strom mittels des Stromsensors 35 gemessen und im Auswertemodul 38 bewertet wird (vgl. Schritte S12 und S13 in Fig. 5).

Die erste Verzugszeit ist so gewählt, dass diese einer Zeitdauer entspricht, in der die Funkenstrecke 14 auftretende Netzfolgeströme oberhalb der festgelegten Stromschwelle, vorliegend 100 A, zuverlässig begrenzen bzw. löschen können sollte.

Wird festgestellt, dass der über den Hauptpfad fließende Strom nach der ersten Verzugszeit unterhalb der festgelegten Stromschwelle liegt, wird die Löschhilfe 36 aktiviert, um den auftretenden Netzfolgestrom innerhalb der festgelegten Zeitdauer zuverlässig zu löschen (vgl. Schritt S14 in Fig. 5).

Weist der über den Hauptpfad fließende Strom auch nach der ersten Verzugszeit jedoch eine Stromstärke oberhalb der Stromschwelle auf, wird die Backup-Schutzvorrichtung 48 ausgelöst (vgl. Schritt S15 in Fig. 5), das heißt das Schaltelement 50 und/oder der Kurzschließer 52.

Es versteht sich, dass - sofern kein Strom fließt - nach Schritt S12 der Überspannungsableiter automatisch in den Stand-by gemäß Schritt S10 zurückgesetzt wird (in Fig. 5 nicht explizit dargestellt).

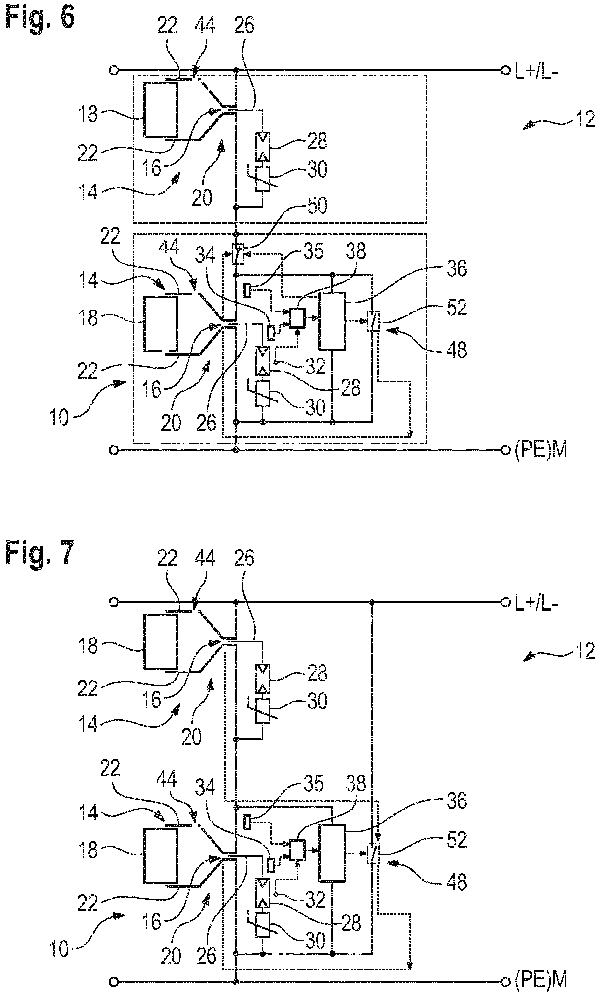

Fig. 6 zeigt eine vierte Ausführungsform des erfindungsgemäßen Überspannungsableiters 10, die über mehrere in Reihe geschaltete Funkenstrecken 14 verfügt, wobei einer der Funkenstrecken 14 die Löschhilfe 36 als Bypass parallel geschaltet ist.

Die Löschhilfe 36 ist hierbei bevorzugt der erdnahen Funkenstrecke 14 zugeordnet, also derjenigen Funkenstrecke 14, die schaltungstechnisch am nächsten zum zweiten Leiter ("(PE)M") angeordnet ist.

In der gezeigten Ausführungsform sind alle der Funkenstrecken 14 Hörnerfunkenstrecken wie zuvor beschrieben. Es versteht sich jedoch, dass auch beliebige Kombinationen von Arten an Funkenstrecken 14 eingesetzt werden können.

Der Einsatz mehrerer Funkenstrecken 14 im Überspannungsableiter 10 dient dazu, noch höhere Spannungen beherrschen zu können und/oder die Leistungsfähigkeit zum Löschen von Netzfolgeströmen weiter zu verbessern. In einer solchen Ausgestaltung ist es jedoch ausreichend, lediglich eine der in Reihe geschalteten Funkenstrecken 14 mit der Löschhilfe 36 zu versehen, da alle in den Funkenstrecken 14 auftretenden Teillichtbögen gelöscht werden, sobald die Löschhilfe 36 auslöst.

Ein Vorteil dieser Ausführungsform gegenüber den zuvor vorgestellten Ausführungsformen ist, dass die Löschhilfe 36 nicht permanent direkt an das Gleichstromnetz 12 angeschlossen ist. Dies ist erst der Fall, sobald zumindest die weitere Funkenstrecke 14 auslöst und somit nur bei Aktivierung der Gesamtanordnung des Überspannungsableiters 10. Auf diese Weise können in der Löschhilfe 36 Komponenten zum Einsatz kommen, die geringeren Anforderungen bzw. Belastungen standhalten können müssen, als es bei einem direkten Anschluss an das Gleichstromnetz 12 der Fall wäre.

Fig. 7 stellt eine fünfte Ausführungsform des erfindungsgemäßen Überspannungsableiters 10 dar, die im Wesentlichen der Ausführungsform nach Fig. 6 entspricht.

Jedoch weist in der fünften Ausführungsform die Backup-Schutzvorrichtung 48 kein Schaltelement 50 auf und der auslösbare Kurzschließer 52 ist unmittelbar mit den Phasenleitern des Gleichstromnetz elektrisch verbunden, sodass alle Funkenstrecken 14 des Überspannungsableiters 10 vom Kurzschließer 52 überbrückt werden, sobald dieser auslöst.

In dieser Ausführungsform kann der Kurzschließer 52 insbesondere anhand von Informationen zum Verhalten einer oder mehreren der Funkenstrecken 14 und/oder der Löschhilfe 36 auslösbar sein.

Die in Fig. 7 dargestellte Ausgestaltung des Überspannungsableiters 10 ist insbesondere dann ausreichend, wenn eine Abschaltung des Überspannungsableiters 10 zusätzlich über ein dem Überspannungsableiter 10 vorgeordnetes (nicht dargestelltes) Überstromschutzelement sichergestellt ist.

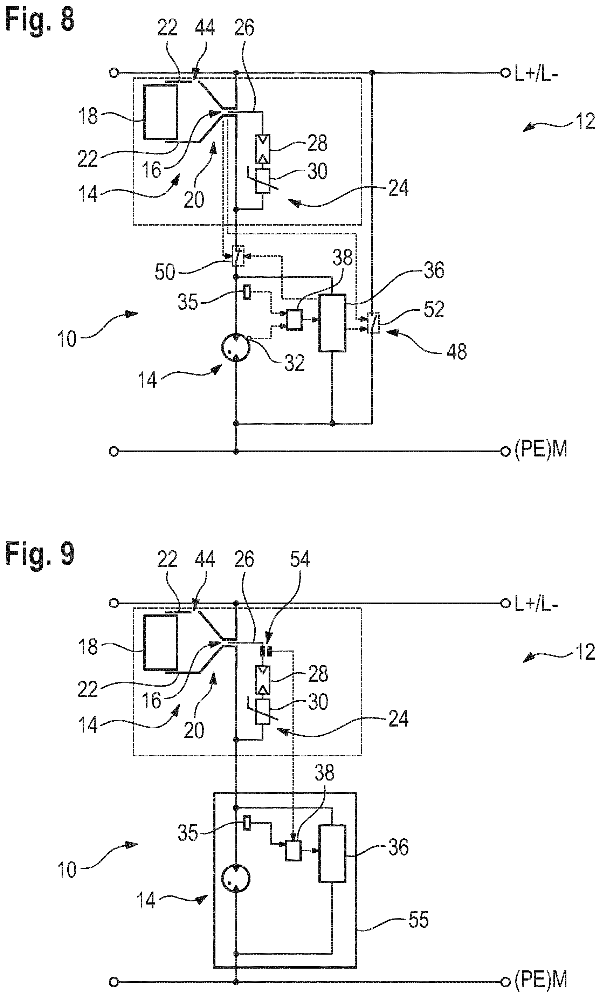

Fig. 8 zeigt eine sechste Ausführungsform des erfindungsgemäßen Überspannungsableiters 10, die im Wesentlichen der Ausführungsform nach Fig. 7 entspricht.

Jedoch ist diejenige Funkenstrecke 14, der die Löschhilfe 36 als Bypass zugeordnet ist, keine Hörnerfunkenstrecke, sondern ein Gasableiter. Anders ausgedrückt umfasst der Überspannungsableiter 10 mehrere unterschiedlich ausgebildete Funkenstrecken 14.

Auf diese Weise kann ein optimaler Kompromiss zwischen Komplexität sowie Kosten der beteiligten Bauteile einerseits und ausreichendem Schutzniveau andererseits realisiert werden.

Wie in Fig. 8 zu erkennen, ist dem Gasableiter ein optischer Sensor 32 zugeordnet, mittels dem festgestellt werden kann, ob sich ein Lichtbogen innerhalb des Gasableiters ausbildet und falls ja, wie lange.

Somit kann das Auswertemodul 38 in dieser Ausführungsform als Auslösebedingungen für die Löschhilfe 36 auf das Auftreten und/oder die Brenndauer eines Lichtbogens im Gasableiter, einen Stromfluss im Hauptpfad und ein Über- oder Unterschreiten einer Stromschwelle im Hauptpfad zurückgreifen.

Fig. 9 zeigt eine siebente Ausführungsform des Überspannungsableiters 10, die sich durch einen besonders einfachen Aufbau auszeichnet.

Die siebente Ausführungsform verfügt ebenso wie die sechste Ausführungsform über mehrere Funkenstrecken 14, wobei eine der Funkenstrecken 14 als Hörnerfunkenstrecke mit Zündhilfe 24 und die andere Funkenstrecke 14 als Gasableiter ausgebildet ist. Dem Gasableiter ist die Löschhilfe 36 im Bypass zugeordnet. Jedoch ist in dieser Ausführungsform der Gasableiter nicht von einem optischen Sensor überwacht.

Stattdessen kann, wie vorliegend dargestellt, im Pfad der Zündhilfe 24 ein Schwellenwertgeber 54 angeordnet sein, der die Aktivierung der Zündhilfe anzeigen kann, beispielsweise beim Überschreiten bzw. Unterschreiten einer Zündhilfsstromschwelle. Grundlegend kann der Schwellenwertgeber 54 auch auf Basis der Detektion eines Magnetfelds arbeiten. In einer besonders einfachen Ausführungsform kann der Schwellenwertgeber 54 ein Reed-Kontakt sein.

Ferner ist ein Stromsensor 35 vorhanden, der dem Hauptpfad zugeordnet ist und ebenfalls als einfacher Schwellenwertsensor ausgebildet sein kann.

Bei bekanntem Verhalten der intakten Funkenstrecken 14 kann somit rein basierend auf dem Über- bzw. Unterschreiten von festgelegten Stromschwellen, ggf. auch nur auf Basis eines einzelnen Sensors im Hauptpfad, darauf geschlossen werden, ob die Löschhilfe 36 zugeschaltet werden muss oder nicht.

Insbesondere sind als Auslösebedingungen in dieser Ausführungsform lediglich die Zündung der Funkenstrecke 14 und das Absinken des Stroms unter die festgelegte Stromschwelle nach einer ersten Wartezeit notwendig.

Jedoch muss die erste Wartezeit ausreichend lang gewählt werden, da während des Löschvorgangs eines Netzfolgestroms ein Mindestschwellenwert der Stromstärke ggf. mehrfach unterschritten wird.

Auch ermöglicht es die Anordnung aus Fig. 9, die Gesamtzeit zum Löschen von Netzfolgeströmen zu verkürzen, ohne Informationen zum Laufverhalten des Lichtbogens in der Hörnerfunkenstrecke heranziehen zu müssen, da selbst im Fall, dass die Löschhilfe 36 zugeschaltet wird, obwohl noch ein Lichtbogen durch die Hörnerfunkenstrecke vorliegt, der auf die Löschhilfe 36 wirkende Strom zumindest begrenzt ist und die Löschfunktion der Löschkammer 18 nicht beeinträchtigt oder sogar von der Löschhilfe 36 unterstützt wird.

Grundlegend ist es auch möglich, dass auf die Berücksichtigung der Stromstärke beim Bestimmen der Auslösebedingungen vollständig verzichtet wird. In diesem Fall würden als Auslösebedingungen lediglich der Zeitpunkt, an dem ein Lichtbogen auftritt, und das Vergehen der festgelegten Zeitdauer herangezogen. Somit würde die Löschhilfe 36 zwangsläufig getriggert, sobald die festgelegte Zeitdauer nach einem Zünden des Lichtbogens verstrichen ist. Eine solche Lösung kann dann sinnvoll sein, wenn sichergestellt wird, dass ein Fehlerstrom im Gleichstromnetz 12 nicht nachträglich in die Löschhilfe 36 geleitet wird. Dies kann dadurch erreicht werden, dass die erste Verzugszeit und/oder die festgelegte Zeitdauer ausreichend lang gewählt werden, sodass auftretende Impulsströme (sicher) abgeleitet und Netzfolgeströme, die die Löschhilfe 36 beschädigen könnten, innerhalb dieser Zeitspanne zuverlässig begrenzt bzw. gelöscht werden oder wenn, wie in den Fig. 6 bis 9 gezeigt, die Löschhilfe 36 keinen Bypass für die Gesamtheit aus allen Funkenstrecken 14 bildet, wie es beispielsweise für die Ausführungsformen gemäß Fig. 1, 2 und 4 der Fall ist.

In den Ausführungsformen nach Fig. 1, 2 und 4 wird die Löschhilfe 36 bei der Aktivierung mit dem prospektiven Netzfolgestrom belastet. Dies kann einerseits zusätzliche Maßnahmen zur Vermeidung von Fehlaktivierungen erforderlich machen, ggf. auch einen Schutz vor Überlastung der Löschhilfe 36, und andererseits kann durch eine vorzeitige Aktivierung auch die Löschfunktion der Funkenstrecke 14 gestört werden, wodurch die Belastung der Funkenstrecke 14 sich sogar erhöhen kann.

Bei einer Reihenschaltung von Funkenstrecken 14 reduziert sich der Einfluss der Aktivierung der Löschhilfe 36 auf das Löschen von hohen Strömen durch die Funkenstrecke 14. Zudem kann die Gefahr der Überlastung der Löschhilfe 36 reduziert werden.

Insbesondere kann ein Überlastschutz der Löschhilfe 36 vorgesehen sein, der eine reversible Überlastabschaltung gewährleistet.

In den Ausführungsformen nach Fig. 8 und 9 wird die Netzfolgestrombegrenzung nahezu ausschließlich von der Funkenstrecke 14 mit Löschkammer 18, also nicht von der Funkenstrecke 14 mit dem Gasableiter und der Löschhilfe 36 realisiert. Eine fehlerhafte Aktivierung der Löschhilfe 36 kann somit nicht zu einer Beeinträchtigung des Löschvermögens bei hohen Strömen führen. Dies führt dazu, dass der Aufwand im Hinblick auf die Anzahl und/oder Art der eingesetzten Sensoren, wie zuvor beschrieben, sowie im Hinblick auf die Auswertung der von den Sensoren erhobenen Messdaten reduziert werden kann. Zugleich ist es möglich, mit geringen Zusatzaufwand auf Seiten der eingesetzten Komponenten eine hohe Flexibilität in der Zeitsteuerung des Verhaltens des Überspannungsableiters 10 zu erreichen, die insbesondere eine Verkürzung der Gesamtabschaltzeit ermöglicht.

Es ist auch möglich, dass die Löschhilfe 36 eine integrierte Überwachungsfunktion aufweist, die dazu eingerichtet ist, die Löschhilfe 36 automatisch abzuschalten, sofern Ströme und/oder Stromgradienten auftreten, die die Löschfähigkeit des Überspannungsableiters 10 übersteigen würden, also einen Löschfähigkeits-Schwellenwert des Überspannungsableiters 10.

Dies ist insbesondere ohne nennenswerten Zusatzaufwand möglich, wenn in der Löschhilfe 36 ein Halbleiter wie ein IGBT oder ein MOSFET zum Einsatz kommt.

In dieser Ausgestaltung kann das Auswertemodul 38 dazu eingerichtet sein, nach einer automatischen Abschaltung der Löschhilfe 36 den zeitlich nächsten Löschversuch angepasst durchzuführen, beispielsweise durch ein angepasstes Ablaufschema zum Auslösen der Löschhilfe 36. Beispielsweise kann das Auslösen der Löschhilfe 36 im zeitlich nächsten Löschversuch ausschließlich auf Basis von Zeitintervallen erfolgen, insbesondere mit kürzeren Zeitintervallen als zuvor.

Die in den Fig. 8 und 9 beschriebene Anordnung von Gasableiter und paralleler Löschhilfe 36 kann, wie zuvor beschrieben, auch ohne unmittelbar in die vorgelagerte Funkenstrecke 14 eingebrachte Sensoren betrieben werden. Dies vereinfacht es, den Überspannungsableiter 10 auch mit anderen folgestrombegrenzenden Ableitern bzw. Funkenstrecken in Reihe zu betreiben.

In Fig. 9 ist zudem schematisch angedeutet, dass der Stromsensor 35, die Löschhilfe 36, das Auswertemodul 38 und eine der Funkenstrecken 14, hier als Gasableiter ausgeführt, Bestandteile eines separaten Moduls 55 sind.

Beispielsweise sind die Bestandteile des separaten Moduls 55 in einem (nicht dargestellten) separaten Gehäuse aufgenommen, was insbesondere aufgrund der vergleichsweise einfachen Sensorik wie sie in der Ausführungsform nach Fig. 9 zum Einsatz kommt, möglich ist.

Derartige separate Module 55 können je nach Bedarf bei konventionellen Überspannungsableitern 10 bzw. Funkenstrecken 14 zur Ertüchtigung des DC-Löschvermögens in Reihe geschaltet werden.

Das Zusammenwirken mit diesen Geräten kann aufgrund der geringen Abschaltzeit des separaten Moduls 55 mit der Löschhilfe 36 nach deren Aktivierung im Nennbereich von < 1ms beim Netzbetrieb leicht berücksichtigt werden. Dies ermöglicht in einem weiten Einsatzbereich den Betrieb von eigentlich für AC-Netze ausgelegten strombegrenzenden Überspannungsschutzgeräten auch in DC-Netzen.

Neben der Verwendung von Hörnerfunkenstrecken zur Netzfolgestrombegrenzung können auch Stapelfunkenstrecken, eine Reihenschaltung von mehreren Gasableitern oder auch sogenannte Radax-Flow-Funkenstrecken verwendet werden, welche mittels Strömung und Druckaufbau den Strom begrenzen. Darüber hinaus ist auch eine Reihenschaltung mit Varistoren oder Suppressordioden möglich. Auch eine Reihenschaltung mit Kombinationen dieser strombegrenzenden Einrichtungen als Funkenstrecken 14 ist möglich.

Eine solche Kombination ist insbesondere dann vorteilhaft, wenn der Überspannungsableiter 10 in Netzen eingesetzt ist, welche zeitweilig mit höheren Spannungen als der Nennspannung betrieben werden, da in diesem Fall beim Ansprechen die Strombegrenzung, welche für die Nennspannung ausgelegt ist, nicht ausreichend ist. Auch ist eine solche Anordnung vorteilhaft, um Alterungseffekten der einzelnen Komponenten des Überspannungsableiters 10 entgegenzuwirken und/oder wenn Komponenten des Überspannungsableiters 10 bereits für die Betriebsspannung unterdimensioniert sind, um niedrige Schutzpegel zu erzielen.

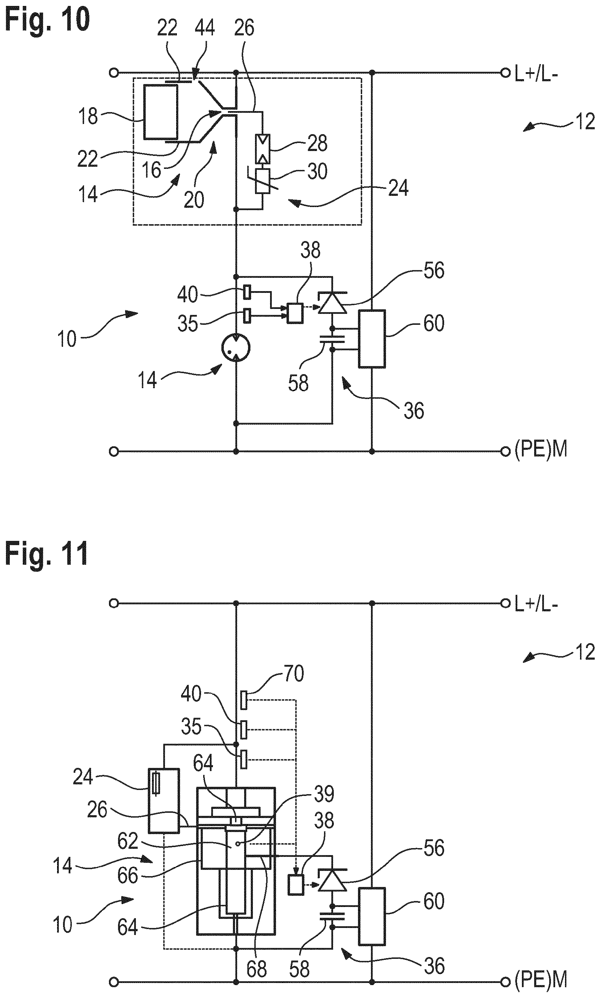

Fig. 10 zeigt eine achte Ausführungsform des erfindungsgemäßen Überspannungsableiters 10.

In der achten Ausführungsform umfasst der Überspannungsableiter 10 erneut mehrere Funkenstrecken 14, von denen eine als Hörnerfunkenstrecke und die andere als Gasableiter ausgebildet ist, wobei dem Gasableiter das Auswertemodul 38 und die Löschhilfe 36 parallel geschaltet und zugeordnet sind.

Die Löschhilfe 36 ist in dieser beispielhaften Ausführungsform eine Kombination einer Snubberschaltung und einer Gegenstromschaltung und verfügt über ein Halbleiterschaltelement 56 und eine Kapazität 58.

Das Halbleiterschaltelement 56 ist als Thyristor ausgebildet.

Die Kapazität 58 ist mit einer Ladeschaltung 60 verbunden, die mit den Leitern des Gleichstromnetzes 12 verbunden und dazu eingerichtet ist, die Kapazität 58 aufzuladen.

Der Überspannungsableiter 10 weist ferner einen Magnetfeldsensor 40 auf, der beispielsweise ein Reedsensor sein kann, und dazu eingerichtet ist, das Auswertemodul 38 in Bereitschaft zu versetzen, sofern der Gasableiter zündet.

Der dem Hauptpfad zugeordnete Stromsensor 35 ist dazu eingerichtet, das Unterschreiten der Stromschwelle im Hauptpfad zu erfassen und diese Information an das Auswertemodul 38 zu übersenden.

Es versteht sich, dass auch eine andere Anzahl von Sensoren, andere Arten von Sensoren und/oder Anordnungen von Sensoren eingesetzt sein können, um den Stromfluss im Hauptpfad zu überwachen.

Im Auswertemodul 38 sind Informationen zum erwarteten Löschverhalten des Gasableiters hinterlegt, welche im einfachsten Fall nur eine vorbestimmte Abfolge und einen zeitlichen Abstand der vom Magnetfeldsensor 40 und/oder vom Stromsensor 35 erhaltenen Signale umfasst.

Basierend auf diesen Informationen als Auslösebedingungen ist das Auswertemodul 38 dazu eingerichtet, das Halbleiterschaltelement 56 anzusteuern, wenn durch den Hauptpfad ein Strom mit einer Stromstärke unterhalb der festgelegten Stromschwelle fließt.

Dies führt dazu, dass die Kapazität 58 über das Halbleiterschaltelement 56 und den Gasableiter entladen wird. Die Kapazität 58 wurde erfindungsgemäß zuvor durch die Ladeschaltung 60 so aufgeladen, dass der Entladestrom eine entgegengesetzte Richtung zu dem noch nicht unterbrochenen Strom über den Gasableiter besitzt.

Somit wird im Gasableiter, also der Funkenstrecke 14, durch den Gegenstrom insgesamt ein Stromnulldurchgang erzwungen, wodurch der Strom in den in Reihe geschalteten Funkenstrecken 14 insgesamt gelöscht wird. Die Stromhöhe des Gegenstromes muss hierzu mindestens der Höhe des Momentanwerts des Stromes durch den Gasableiter entsprechen.

Der Aufwand zur Erzeugung des Gegenstromes ist bei der vorgeschlagenen Anwendung dieser Löschhilfe 36 für kleine oder bereits stark begrenzte Netzfolgeströme mit einer Stromstärke von im Wesentlichen 100 A deutlich geringer als für die prospektiven Ströme des Netzes, welche eine Stromstärke im Bereich von mehreren 10 kA haben können.

Die Erzeugung des Gegenstromes kann neben einer einfachen Entladung einer Kapazität auch mit anderen bekannten Prinzipien erfolgen, beispielsweise transformatorisch oder gepulst.

Soll als Löschhilfe 36 ein Resonanzkreis (auch als "Schwingkreis" bezeichnet) genutzt werden, ist es möglich, die Kapazität 58 in der in Fig. 10 dargestellten Ausgestaltung gegen ein sogenanntes RLC-Glied (Widerstand-Induktivität-Kapazität) zu ersetzen, wobei aufgrund von Schwingungen ein Stromfluss in beide Richtungen möglich sein muss.

Im Gegensatz zum Gegenstromprinzip kann, beispielsweise bei kleinen Strömen, auch die Aufladung eines Kondensators bzw. einer Kapazität zum Löschen des Lichtbogens genutzt werden. Die Kapazität bzw. der Kondensator wird hierbei, zum Beispiel durch einen Halbleiter, bei Erreichen der mindestens zwei Auslösebedingungen zugeschaltet.

Alternativ zu Schaltern mit Ein- und Ausschaltvermögen können bei aktiven Snubberschaltungen preiswerte Halbleiter mit geringeren Bahnwiderständen eingesetzt werden, welche auch mit geringen Spannungen steuerbar sind. In diesem Fall ist es auch möglich, eine Löschhilfe 36 ohne aktives Ausschaltverhalten zu realisieren.

Bei kleinen Netzfolgeströmen, welche durch die Löschhilfe 36 abgeschaltet werden müssen, kann die aktive Zuschaltung einer abgestimmt kleinen Kapazität hinreichend zum Löschen des Lichtbogens sein. Bei der allmählichen Aufladung der Kapazität wird zudem die Steilheit des Spannungsaufbaus begrenzt, wodurch die Gefahr der Wiederzündung der Funkenstrecke 14 stark reduziert wird.

Um hinreichend kurze Gesamtabschaltzeiten zu erreichen, kann es sinnvoll sein, die vollständige Aufladung der Kapazität auf die Netzspannung zu unterbinden. Die Größe der Kapazität kann auch anpassbar an die Belastung gewählt werden. Dies ist beispielweise durch eine kaskadierte Zuschaltung von weiteren Kapazitäten in Abhängigkeit der Ladespannung und/oder der Zeit möglich. Hierdurch kann der Löschvorgang bzgl. des Erfolgs beim Löschen und die Zeitdauer bzgl. des realen Bedarfes optimiert werden. Für den Betrieb einer solchen Anordnung ist zudem eine passive oder aktive Entladung der aufgeladenen Kapazität(en) nach einem Schaltvorgang und ggf. auch ein zusätzlicher Überspannungsschutz sinnvoll.

Neben der einfachen Zuschaltung des Schwingkreises bei kleinen Strömen in der Funkenstrecke 14 kann bei der Schwingkreisabstimmung auch eine Vorladung des im RLC-Glied genutzten Energiespeichers vorgesehen sein oder eine aktive Anregung der Schwingung durch induktive Kopplung erfolgen.

Fig. 11 zeigt eine neunte Ausführungsform eines erfindungsgemäßen Überspannungsableiters 10, die auf eine Funkenstrecke 14 zurückgreift, die auf Basis eines Druckaufbaus oder einer Gasströmung innerhalb mindestens eines Lichtbogenkanals 62 arbeitet.

Solche Funkenstrecken 14 erzeugen beispielsweise über die Bildung eines Hartgases im Lichtbogenkanal 62 zwischen Hauptelektroden 64 einen hohen Druck, eine starke Gasströmung oder eine Kombination davon. Hierdurch kann eine hohe Bogenspannung des Lichtbogens erzeugt werden, welche den Lichtbogen begrenzen und löschen kann.

Wie bereits zuvor beschrieben, können solche strombegrenzenden Funkenstrecken 14 nach dem sogenannten Radax-Flow-Prinzip ohne weitere Modifikationen in Reihe zu den bereits beschriebenen separaten Modulen 55 mit Löschhilfen 36 geschaltet werden.

Jedoch ist, ähnlich wie bei Hörnerfunkenstrecken auch, durch geringfügige Modifikationen eine Integration in oder an die Funkenstrecke 14 möglich. Um die strombegrenzende Wirkung der Funkenstrecke 14 zu nutzen, ist für die Anbindung der Löschhilfe 36 neben den Hauptanschlüssen ein dritter Potentialanschluss notwendig. Die Löschhilfe 36 wird zwischen einen Hauptanschluss und den weiteren Potentialanschluss geschaltet. Der Potentialanschluss besitzt Kontakt zum Lichtbogenkanal 62 und greift nur einen Teil der Lichtbogenspannung ab. Als Potentialanschluss können vorhandene Teile, wie Zwischenelektroden oder auch Triggerelektroden etc. verwendet werden. Jedoch können auch zusätzliche Elektroden eingebracht werden.

In Fig. 11 ist der Lichtbogenkanal 62 geradlinig verlaufend dargestellt. Es sind jedoch auch abweichende geometrische Ausgestaltungen des Lichtbogenkanals 62 denkbar.

Der Lichtbogenkanal 62 ist von einem hartgasabgebenden Material 66 umgeben.

Im Lichtbogenkanal 62 ist ein optischer Sensor 39 angeordnet, mittels dem das Auftreten und die Brenndauer eines Lichtbogens detektiert werden können.

Die Funkenstrecke 14 weist eine Zündhilfe 24 mit einer Zündhilfselektrode 26 auf, über die der Lichtbogen im Lichtbogenkanal 62 gezündet werden kann.

Ferner ist eine zusätzliche Anschlusselektrode 68 vorgesehen, die mit der Löschhilfe 36 elektrisch leitend verbunden ist.

Die Löschhilfe 36 ist in der dargestellten Ausführungsform analog zu Fig. 10 als Gegenstromschaltung ausgebildet. Grundlegend können jedoch auch andere Arten an Löschhilfen 36 wie zuvor beschrieben zum Einsatz kommen.

Die Anschlusselektrode 68 steht bei Aktivierung der Funkenstrecke 14 mit dem sich zwischen den Hauptelektroden 64 ausbildendem Lichtbogen in Verbindung, sodass bezogen auf den Kontaktbereich der Anschlusselektrode 68 zwei Teilbereiche des Lichtbogens jeweils zu einer Hauptelektrode bestehen.

Durch die in Fig. 11 gezeigte Anordnung muss die Löschhilfe 36 nicht parallel zur Funkenstrecke 14 geschaltet werden und ist auch nicht unmittelbar mit dem Gleichstromnetz 12 verbunden, sodass zuverlässig ausgeschlossen werden kann, dass Ströme über die Löschhilfe 36 fließen, die diese beschädigen könnten.

Durch die Gegenstromschaltung der Löschhilfe 36 wird einer der Teillichtbögen gelöscht, wodurch infolge auch der gesamte Lichtbogen zum Erliegen kommt. Vorteilhaft ist die Wahl eines Gegenstromprinzips auch dadurch, dass keine Reduktion der Strombegrenzung vor der Löschung infolge einer notwendigen Kommutierung auftritt.

Die Aktivierung der Löschhilfe 36 erfolgt über das Auswertemodul 38, wobei dieses wahlweise auf die vom Magnetfeldsensor 40, dem Stromsensor 35, dem optischen Sensor 39 und/oder einem Spannungssensor 70 erhaltenen Daten zurückgreifen kann, um wenigstens zwei Auslösebedingungen zu identifizieren, die charakteristisch dafür sind, dass die Funkenstrecke 14 allein den Netzfolgestrom nicht innerhalb der festgelegten Zeitdauer löschen kann. Es versteht sich, dass auch in dieser Ausführungsform die Art, Anzahl und/oder Anordnung an Sensoren von der in Fig. 11 dargestellten Variante abweichen kann.

Beim Einsatz einer Löschhilfe 36 mit Kommutierungsprinzip sind mehrere Faktoren zu beachten.

Die strombegrenzende Wirkung bei Funkenstrecken 14 auf Basis eines Druckaufbaus oder einer Gasströmung ist belastungsabhängig. Die Höhe des Drucks ist unter anderem von der Stromhöhe des Impulsstromes und/oder des Netzfolgestromes abhängig. Wird eine solche Funkenstrecke 14 somit bei einer energiearmen Störgröße in einem Gleichstromnetz 12 mit kleinen Netzfolgestrom unterhalb der Stromschwelle der Löschhilfe 36 aktiviert, kann der Druckaufbau nicht innerhalb einer hinreichend kurzen Zeit erfolgen, wodurch ein auftretender Netzfolgestrom nicht immer gelöscht oder begrenzt werden kann. In diesem Fall ist die Aktivierung der Löschhilfe 36 jedoch in jedem Fall erfolgreich, da der Netzfolgestrom geringer als die Löschgrenze der Löschhilfe 36 ist.

Erfolgt jedoch eine Begrenzung eines größeren Stromes unter die Löschgrenze ohne selbstständige rasche Löschung des Stromes, kann bei einer einfachen Löschhilfe 36 nach dem Hybridprinzip die Gefahr bestehen, dass durch das niederohmige Kurzschließen eines Teilbereichs des Lichtbogens der Strom wieder ansteigt und deren Löschgrenze übersteigt.

Es muss daher darauf geachtet werden, die Strombegrenzung nicht signifikant durch die Aktivierung einer solchen Löschhilfe 36 zu reduzieren. Vorteilhaft kann es sein, dabei den Teil des Lichtbogens mit geringerem Spannungsabfall (bspw. aufgrund einer geringeren Länge bzw. einer geringeren elektrischen Feldstärke) zu löschen und den Bereich mit gelöschtem Lichtbogen gegenüber dem weiter existierenden Lichtbogen abzuschotten, beispielsweise mit Verdeckungen oder über einen Strömungsschatten.

Aufgrund der relativ starken Strombegrenzung bei diesen Funkenstrecken sind die Teilspannungen der Abschnitte des Lichtbogens recht hoch. Dies gestattet auch eine vollständige Kommutierung des Stromes aus der Funkenstrecke 14 in die Löschhilfe 36 bei hoher Impedanz des Stromkreises der Löschhilfe 36. Durch die Einbindung einer passiven bzw. aktiven Impedanz oder deren sukzessiven Anpassung bzw. nichtlinearen Charakteristik bleibt der Einfluss auf die Strombegrenzung gering und der Löschvorgang kann trotz begrenzter Stromtragfähigkeit und Abschaltvermögen der Löschhilfe 36 erreicht werden.

Sollte es trotzdem zu einer Überlastung der Löschhilfe 36 kommen, kann der Pfad der Löschhilfe 36 beispielsweise mittels eines Halbleiters wie einem IGBT vergleichsweise schnell gesperrt werden, ohne einen Löschvorgang in der Löschhilfe 36 einzuleiten, das heißt, ohne eine Mindestverzugszeit abzuwarten.

In diesem Fall zündet bei der Notabschaltung der Löschhilfe 36 die Funkenstrecke 14 wieder oder verlischt nicht und die Löschhilfe 36 wird sofort entlastet. Da die Löschhilfe 36 somit durch diese Eigenschutzfunktion intakt bleibt, können weitere Löschversuche mittels der Löschhilfe 36 durchgeführt werden, beispielsweise basierend auf einer Zeittaktung und/oder auf anderen festgelegten Kriterien. Bei mehrfachen Fehlversuchen kann wie bereits beschrieben eine Aktivierung von zusätzlichen (nicht dargestellten) Schutzorgangen herbeigeführt werden.

Insgesamt zeichnet sich der erfindungsgemäße Überspannungsableiter 10 durch eine zuverlässige Handhabung auftretender Impuls- und Netzfolgeströme aus. Zudem kann der Aufbau und die Komplexität der eingesetzten Bestandteile des Überspannungsableiters 10 derart vereinfacht werden, dass ein optimaler Kompromiss aus Kosten und Zuverlässigkeit beim (sicheren) Ableiten von Impulsströmen und beim Löschen von Netzfolgeströmen erreicht wird.

## Patentansprüche

1. Überspannungsableiter (10) für ein Gleichstromnetz (12) umfassend
eine Funkenstrecke (14) zum Löschen von Netzfolgeströmen im Gleichstromnetz (12), deren Stromstärke gleich oder größer ist als eine festgelegte Stromschwelle,
eine der Funkenstrecke (14) zugeordnete triggerbare Löschhilfe (36), die dazu eingerichtet ist, Netzfolgeströme unterhalb der festgelegten Stromschwelle zu löschen, und
ein Auswertemodul (38) zum Triggern der Löschhilfe (36), **dadurch gekennzeichnet, dass** das
Auswertemodul (38) dazu eingerichtet ist, die Löschhilfe (36) zu triggern, sobald wenigstens zwei Auslösebedingungen erfüllt sind, die charakteristisch dafür sind, dass die Funkenstrecke (14) allein den Netzfolgestrom innerhalb einer festgelegten Zeitdauer nicht löschen kann.

2. Überspannungsableiter nach Anspruch 1, wobei die wenigstens zwei Auslösebedingungen auf zumindest zwei der nachfolgenden Parameter basieren: ein Auftreten, eine Position, eine Bewegung und/oder eine Brenndauer eines Lichtbogens in der Funkenstrecke (14), ein Auslösen einer Zündhilfe (24) der Funkenstrecke (14), ein Stromfluss im dem Überspannungsableiter (10) zugeordneten Pfad des Gleichstromnetzes (12) und ein Unterschreiten der festgelegten Stromschwelle im dem Überspannungsableiter (10) zugeordneten Pfad des Gleichstromnetzes (12).

3. Überspannungsableiter nach einem der vorhergehenden Ansprüche, wobei der Überspannungsableiter (10) über einen optischen Sensor (39) zum Erfassen eines Lichtbogens in der Funkenstrecke (14), einen Stromsensor (35) zum Messen von Stromstärken im Gleichstromnetz (12) und/oder einen Spannungssensor (70) umfasst.

4. Überspannungsableiter nach einem der vorhergehenden Ansprüche, wobei die festgelegte Stromschwelle kleiner 100 A ist und/oder wobei die festgelegte Zeitdauer kürzer als 10 ms ist.

5. Überspannungsableiter nach einem der vorhergehenden Ansprüche, wobei die Löschhilfe eine Hybridschaltung, eine Snubberschaltung, eine Gegenstromschaltung, ein aktiver Resonanzkreis und/oder ein passiver Resonanzkreis ist.

6. Überspannungsableiter nach einem der vorhergehenden Ansprüche, wobei der Überspannungsableiter (10) eine Backup-Schutzvorrichtung (48) aufweist, die dazu eingerichtet ist, die Funkenstrecke (14) und/oder die Löschhilfe (36) vom Gleichstromnetz (12) zu trennen, falls im dem Überspannungsableiter (10) zugeordneten Pfad des Gleichstromnetzes (12) ein Strom auftritt, der zu einer Beschädigung der Funkenstrecke (14) und/oder der Löschhilfe (36) führen würde.

7. Überspannungsableiter nach einem der vorhergehenden Ansprüche, wobei das Auswertemodul (38) über ein Maschinenlernmodul (46) verfügt, das dazu eingerichtet ist, die festgelegte Stromschwelle, die festgelegte Zeitdauer und/oder die berücksichtigten Auslösebedingungen anhand eines Trainingsdatensatzes und/oder eines Datensatzes anzupassen, der Informationen zu vom Überspannungsableiter (10) in der Vergangenheit gehandhabten Netzfolgeströmen umfasst.

8. Überspannungsableiter nach einem der vorhergehenden Ansprüche, wobei die Löschhilfe (36) als separates Modul ausgebildet ist, das der Funkenstrecke (14) parallel geschaltet oder das mit der Funkenstrecke (14) in Serie geschaltet ist.

9. Überspannungsableiter nach einem der vorhergehenden Ansprüche, wobei der Überspannungsableiter (10) mehrere in Reihe geschaltete Funkenstrecken (14) umfasst, wobei wenigstens einer der Funkenstrecken (14) eine triggerbare Löschhilfe (36) zugeordnet ist.

10. Verfahren zum Betreiben eines Überspannungsableiters (10) für ein Gleichstromnetz (12), umfassend folgende Schritte:
- Detektieren mittels eines Auswertemoduls (38) des Überspannungsableiters (10), ob wenigstens zwei Auslösebedingungen erfüllt sind, die charakteristisch dafür sind, dass eine Funkenstrecke (14) des Überspannungsableiters (10) allein einen auftretenden Netzfolgestrom im Gleichstromnetz (12) nicht innerhalb einer festgelegten Zeitdauer löschen kann, und, falls dies der Fall ist,
- Triggern einer Löschhilfe (36) des Überspannungsableiters (10) mittels des Auswertemoduls (38).

11. Verfahren nach Anspruch 10, wobei die Löschhilfe (36) passiv bleibt, wenn die Funkenstrecke (14) selbst in der Lage ist, den auftretenden Netzfolgestrom innerhalb der zuvor festgelegten Zeitdauer zu löschen, und wobei die Löschhilfe (36) aktiviert wird, wenn die Funkenstrecke (14) selbst nicht in der Lage ist, den auftretenden Netzfolgestrom innerhalb der zuvor festgelegten Zeitdauer zu löschen.

12. Verfahren nach Anspruch 10 oder 11, wobei ein Lichtbogen in der Funkenstrecke (14) mittels eines optischen Sensors (39) erfasst wird, eine Stromstärke im Gleichstromnetz (12) mittels eines Stromsensors (35) gemessen wird und/oder eine Spannung mittels Spannungssensor (70) gemessen wird, wobei der optische Sensor (39), der Stromsensor (35) und/oder der Spannungssensor (70) zumindest einen Parameter erfassen bzw. erfasst, basierend worauf die wenigstens zwei Auslösebindungen überprüft werden.

13. Verfahren nach einem der Ansprüche 10 bis 12, wobei die Funkenstrecke (14) und/oder die Löschhilfe (36) vom Gleichstromnetz (12) getrennt werden, falls im dem Überspannungsableiter (10) zugeordneten Pfad des Gleichstromnetzes (12) ein Strom auftritt, der zu einer Beschädigung der Funkenstrecke (14) und/oder der Löschhilfe (36) führen würde.

14. Verfahren nach einem der Ansprüche 10 bis 13, wobei Parameter für die Funktionsweise des Überspannungsableiters (10) kontinuierlich angepasst werden.

15. Verfahren nach einem der Ansprüche 10 bis 14, wobei Informationen zum erwarteten Verhalten der Funkenstrecke (14) berücksichtigt werden, um zu festzustellen, ob die Funkenstrecke (14) allein den auftretenden Netzfolgestrom im Gleichstromnetz (12) innerhalb der festgelegten Zeitdauer löschen kann oder nicht.

## Claims

1. A surge arrester (10) for DC mains (12), comprising
a spark gap (14) for extinguishing mains follow currents in the DC mains (12), the current intensity of which is equal to or greater than a specified current threshold,
a triggerable extinguishing aid (36) assigned to the spark gap (14), which is set up to extinguish mains follow currents below the specified current threshold, and
an evaluation module (38) for triggering the extinguishing aid (36), **characterized in that** the evaluation module (38) is set up to trigger the extinguishing aid (36) as soon as at least two tripping conditions are fulfilled which are characteristic of the fact that the spark gap (14) alone cannot extinguish the mains follow current within a specified time duration.

2. The surge arrester according to claim 1, wherein the at least two tripping conditions are based on at least two of the following parameters: an occurrence, a position, a movement and/or a burning duration of an arc in the spark gap (14), an activation of an ignition aid (24) of the spark gap (14), a current flow in the path of the DC mains (12) assigned to the surge arrester (10), and a falling below the specified current threshold in the path of the DC mains (12) assigned to the surge arrester (10).

3. The surge arrester according to any of the preceding claims, wherein the surge arrester (10) comprises an optical sensor (39) for detecting an arc in the spark gap (14), a current sensor (35) for measuring current intensities in the DC mains (12) and/or a voltage sensor (70).

4. The surge arrester according to any of the preceding claims, wherein the specified current threshold is less than 100 A and/or wherein the specified time duration is shorter than 10 ms.

5. The surge arrester according to any of the preceding claims, wherein the extinguishing aid is a hybrid circuit, a snubber circuit, a countercurrent circuit, an active resonant circuit and/or a passive resonant circuit.

6. The surge arrester according to any of the preceding claims, wherein the surge arrester (10) has a backup protective device (48) which is set up to disconnect the spark gap (14) and/or the extinguishing aid (36) from the DC mains (12) if a current occurs in the path of the DC mains (12) assigned to the surge arrester (10) which would lead to damage to the spark gap (14) and/or the extinguishing aid (36).

7. The surge arrester according to any of the preceding claims, wherein the evaluation module (38) has a machine learning module (46) which is set up to adapt the specified current threshold, the specified time duration and/or the considered tripping conditions on the basis of a training data set and/or a data set comprising information about mains follow currents handled by the surge arrester (10) in the past.

8. The surge arrester according to any of the preceding claims, wherein the extinguishing aid (36) is designed as a separate module which is connected in parallel with the spark gap (14) or which is connected in series with the spark gap (14).

9. The surge arrester according to any of the preceding claims, wherein the surge arrester (10) comprises a plurality of series-connected spark gaps (14), wherein a triggerable extinguishing aid (36) is assigned to at least one of the spark gaps (14).

10. A method of operating a surge arrester (10) for DC mains (12), comprising the following steps:
- detecting, by means of an evaluation module (38) of the surge arrester (10), whether at least two tripping conditions are fulfilled which are characteristic of the fact that a spark gap (14) of the surge arrester (10) alone cannot extinguish an occurring mains follow current in the DC mains (12) within a specified time duration, and, if this is the case,
- triggering an extinguishing aid (36) of the surge arrester (10) by means of the evaluation module (38).

11. The method according to claim 10, wherein the extinguishing aid (36) remains passive if the spark gap (14) itself is able to extinguish the occurring mains follow current within the previously specified time duration, and wherein the extinguishing aid (36) is activated if the spark gap (14) itself is not able to extinguish the occurring mains follow current within the previously specified time duration.

12. The method according to claim 10 or 11, wherein an arc in the spark gap (14) is detected by means of an optical sensor (39), a current intensity in the DC mains (12) is measured by means of a current sensor (35), and/or a voltage is measured by means of a voltage sensor (70), wherein the optical sensor (39), the current sensor (35) and/or the voltage sensor (70) detect(s) at least one parameter based on which the at least two tripping conditions are checked.

13. The method according to any of claims 10 to 12, wherein the spark gap (14) and/or the extinguishing aid (36) are disconnected from the DC mains (12) if a current occurs in the path of the DC mains (12) assigned to the surge arrester (10) which would lead to damage to the spark gap (14) and/or the extinguishing aid (36).

14. The method according to any of claims 10 to 13, wherein parameters for the operation of the surge arrester (10) are continuously adjusted.

15. The method according to any of claims 10 to 14, wherein information about the expected behavior of the spark gap (14) is taken into account to determine whether or not the spark gap (14) alone can extinguish the occurring mains follow current in the DC mains (12) within the specified time duration.

## Revendications

1. Parafoudre (10) pour un réseau à courant continu (12) comprenant
un éclateur (14) pour supprimer les courants de suite de réseau dans le réseau à courant continu (12), dont l'intensité de courant est égale ou supérieure à un seuil de courant défini,
un auxiliaire d'extinction (36) déclenchable associé à l'éclateur (14), qui est conçu pour éteindre les courants de suite de réseau en dessous du seuil de courant défini, et
un module d'évaluation (38) pour déclencher l'aide à l'extinction (36), **caractérisé en ce que** le module d'évaluation (38) est conçu pour déclencher l'aide à l'extinction (36) dès que sont remplies au moins deux conditions de déclenchement caractéristiques du fait que l'éclateur (14) ne peut pas à lui seul éteindre le courant de suite de réseau dans un laps de temps déterminé.

2. Parafoudre selon la revendication 1, dans lequel les au moins deux conditions de déclenchement sont basées sur au moins deux des paramètres suivants : une apparition, une position, un mouvement et/ou une durée de combustion d'un arc électrique dans l'éclateur (14), un déclenchement d'un auxiliaire d'amorçage (24) de l'éclateur (14), un flux de courant dans le chemin du réseau de courant continu (12) associé au parafoudre (10) et un dépassement vers le bas du seuil de courant fixé dans le chemin du réseau de courant continu (12) associé au parafoudre (10).

3. Parafoudre selon l'une des revendications précédentes, le parafoudre (10) comprenant un capteur optique (39) pour détecter un arc électrique dans l'éclateur (14), un capteur de courant (35) pour mesurer les intensités de courant dans le réseau à courant continu (12) et/ou un capteur de tension (70).

4. Parafoudre selon l'une des revendications précédentes, dans lequel le seuil de courant défini est inférieur à 100 A et/ou dans lequel la durée définie est inférieure à 10 ms.

5. Parafoudre selon l'une des revendications précédentes, dans lequel l'aide à l'extinction est un circuit hybride, un circuit d'amortissement, un circuit à contre-courant, un circuit résonnant actif et/ou un circuit résonnant passif.

6. Parafoudre selon l'une des revendications précédentes, le parafoudre (10) comportant un dispositif de protection de secours (48) qui est conçu pour déconnecter l'éclateur (14) et/ou l'aide à l'extinction (36) du réseau à courant continu (12) si un courant se produit dans le chemin du réseau à courant continu (12) associé au parafoudre (10), ce qui entraînerait un endommagement de l'éclateur (14) et/ou de l'aide à l'extinction (36).

7. Parafoudre selon l'une des revendications précédentes, dans lequel le module d'évaluation (38) dispose d'un module d'apprentissage automatique (46) qui est conçu pour adapter le seuil de courant défini, la durée définie et/ou les conditions de déclenchement prises en compte à l'aide d'un ensemble de données d'apprentissage et/ou d'un ensemble de données qui comprend des informations sur les courants de suite de réseau traités par le limiteur de surtension (10) dans le passé.

8. Parafoudre selon l'une des revendications précédentes, dans lequel l'aide à l'extinction (36) est conçue comme un module séparé qui est connecté en parallèle à l'éclateur (14) ou qui est connecté en série avec l'éclateur (14).

9. Parafoudre selon l'une des revendications précédentes, le parafoudre (10) comprenant plusieurs éclateurs (14) montés en série, au moins un des éclateurs (14) étant associé à un dispositif d'extinction déclenché (36).

10. Procédé pour faire fonctionner un parafoudre (10) pour un réseau à courant continu (12), comprenant les étapes suivantes :
- Détection au moyen d'un module d'évaluation (38) du parafoudre (10) si au moins deux conditions de déclenchement sont remplies, qui sont caractéristiques du fait qu'un éclateur (14) du parafoudre (10) ne peut pas à lui seul éteindre un courant de suite de réseau apparaissant dans le réseau à courant continu (12) dans un délai déterminé, et, si tel est le cas,
- déclencher une aide à l'extinction (36) du parafoudre (10) au moyen du module d'évaluation (38).

11. Procédé selon la revendication 10, dans lequel l'aide à l'extinction (36) reste passive lorsque l'éclateur (14) lui-même est capable d' d'effacer le courant de suite de réseau qui se produit dans le délai préalablement fixé, et l'aide à l'extinction (36) étant activée lorsque l'éclateur (14) lui-même n'est pas en mesure d'effacer le courant de suite de réseau qui se produit dans le délai préalablement fixé.

12. Procédé selon la revendication 10 ou 11, dans lequel un arc électrique dans l'éclateur (14) est détecté au moyen d'un capteur optique (39), une intensité de courant dans le réseau à courant continu (12) est mesurée au moyen d'un capteur de courant (35) et/ou une tension est mesurée au moyen d'un capteur de tension (70), le capteur optique (39), le capteur de courant (35) et/ou le capteur de tension (70) détectent au moins un paramètre, sur la base duquel les au moins deux liaisons de déclenchement sont vérifiées.

13. Procédé selon l'une des revendications 10 à 12, dans lequel l'éclateur (14) et/ou l'aide à l'extinction (36) sont déconnectés du réseau à courant continu (12) si un courant se produit dans le chemin du réseau à courant continu (12) associé au parafoudre (10), ce qui endommagerait l'éclateur (14) et/ou l'aide à l'extinction (36).

14. Procédé selon l'une des revendications 10 à 13, dans lequel les paramètres pour le fonctionnement du parafoudre (10) sont ajustés en continu.

15. Procédé selon l'une des revendications 10 à 14, dans lequel des informations sur le comportement attendu de l'éclateur (14) sont prises en compte pour déterminer si l'éclateur (14) peut ou non éteindre à lui seul le courant de suite de réseau apparaissant dans le réseau à courant continu (12) dans le délai spécifié.
